# EUROPEAN PATENT SPECIFICATION

(11) **EP 1 304 355 B1**
(45) Date of publication and mention of the grant of the patent: **16.11.2005**
(21) Application number: 02019730.7
(22) Date of filing: 03.09.2002
(51) Int. Cl.: C08L 53/00, C08F 8/14, C08G 63/668, C08G 64/18, C08G 69/48

(54) **Inherently electrostatic dissipating block copolymer compositions**
Inhärente elektrostatischentladungsvermindernde Blockcopolymerzusammensetzungen
Compositions de copolymeres sequences dissipant intrinsequement les charges électrostatiques

(30) Priority: 16.10.2001 US 981155
(43) Date of publication of application: 23.04.2003
(73) Proprietor: EASTMAN CHEMICAL COMPANY, Kingsport, TN 37660 (US)
(72) Inventor: Armentrout, Rodney Scott, Kingsport, TN 37660 (US); McWilliams, Douglas Stephens, Kingsport, TN 37664 (US)
(74) Representative: Wibbelmann, Jobst

(56) References cited:
- FR-A- 2 820 139

## Description

### TECHNICAL FIELD OF THE INVENTION

This invention relates to inherently electrostatic dissipating polymers that are static dissipating and may be blended with other polymers to impart static dissipating characteristics to various articles of manufacture, particularly films, fibers, and molded articles.

### BACKGROUND OF THE INVENTION

Electronic components represent a particular technical challenge for electrostatic dissipating packaging materials. Certain articles of manufacture, such as hard disk drive components, not only require protection from static dissipation, but also require the maintenance of a very clean environment. Therefore, packaging materials of acceptable cleanliness will not exhibit high levels of out gassing or ionic extractables. Extraction of cations and anions is of particular concern to the hard disk drive industry.

Inherently electrostatic dissipative block copolymers, commonly referred to in the industry as IDPs, are preferred materials used in the packaging of electronic components. IDPs, in general, have high molecular weights; thus, when blended with a matrix polymer, IDPs do not bloom to the surface and the article of manufacture retains its electrostatic dissipating properties even after many wash cycles.

A number of patents disclose inherently electrostatic dissipating copolymer compositions and their use as electrostatic dissipating additives for other polymers. Such copolymers that are derived from polyurethane and polyethylene glycol are disclosed in U.S. Pat. Nos. 5,159,053, 5,342,889 and 5,574,104. These polyetherurethane copolymers, which include the commercial product known as Stat-Rite™ available from Noveon, Inc. of Cleveland, Ohio, may be blended with other polymers as an electrostatic dissipating agent.

The use of ethylene oxide copolymers in imparting electrostatic dissipating properties to various polymers is disclosed in U.S. Pat. Nos. 4,719,263, 4,931,506, 5,101,139 and 5,237,009. This art pertains to generating inherently electrostatic dissipating block copolymers by reactive extrusion.

As disclosed in U.S. Pat. Nos. 4,230,838 and 5,604,284, polyetheresteramide copolymers that are derived from dicarboxylic polyamide and polyethylene glycol act as inherently electrostatic dissipating copolymers. Blends of polyetheresteramide copolymers with other polymers are disclosed in U.S. Pat. Nos. 5,298,558 and 5,886,098.

Other sources for prior art pertaining to inherently electrostatic dissipating copolymers are "Electrostatic Dissipating Properties of Poly(oxyethylene)amine-Modified Polyamides", Industrial Engineering Chemistry Research, 37(11), 4284 (1998) and "Hydrophilicity, Crystallinity and Electrostatic Dissipating Properties of Poly(oxyethylene)-segmented Polyurethanes", Polymer International, 48(1), 57 (1999). Another source of prior art pertaining to blends of inherently electrostatic dissipating polymers with non-conductive matrix polymers is "Electrically Conductive Polymer Composites and Blends", Polymer Engineering and Science, 32(1), 36 (1992).

In the industry materials are continually being sought with improved electrostatic dissipative properties exemplified by having lower surface resistivities. One solution as disclosed U.S. Pat. Nos. 5,604,284 and 5,886,098 is the use of ionic solutes such as the addition of alkali metal or alkaline earth metal halides to improve the electrostatic dissipating properties of inherently electrostatic dissipating polymers. However, in many cases the ionic solutes are easily extracted therefore hindering their use in electronic packaging applications.

Thus, there is a need to provide ;a material with improved electrostatic dissipating properties over the IDPs currently available in the prior art. In addition, such material must not surface migrate or have significant extractables. Accordingly, it is to the provision of such that the present invention is primarily directed.

### SUMMARY OF THE INVENTION

An acid end-capped inherently electrostatic dissipating block copolymer (acid end-capped IDP) composition comprises:
(A) from about 95 to about 99.99 weight percent of an inherently electrostatic dissipating block copolymer (IDP) comprised of:
   (i) from about 5 to about 85 weight percent of a soft segment of a polyalkylene glycol
      and
   (ii) from about 15 to about 95 weight percent of a hard segment, wherein the hard segment is derived from a polymer having a glass transition temperature or crystalline melting temperature greater than ambient temperature and being reactive with a hydroxyl functionality;
   wherein the weight percents of the soft segment and the hard segment are based on the total weight of components (i) and (ii);
   and
(B) from about 0.01 to about 5 weight percent of an acid end-capping reagent having an acid functionality of at least two;
wherein the weight percents of the IDP and the acid end-capping reagent are based on the total weight of components (A) and (B); and wherein after formation of the IDP, the IDP is subsequently modified with the acid end-capping reagent to form the acid end-capped IDP composition.

These acid end-capped IDP compositions of the present invention exhibit improved electrostatic dissipating properties over prior art IDPs that have not been modified to contain a high concentration of acid end groups; and because the acid end-capping reagent is reacted with the IDP, extractables are minimized and migration to the surface does not occur.

The acid end-capped IDP compositions may be added to thermoplastic base materials to form an alloy. Processes for preparing the acid end-capped IDP compositions and the alloys are also set forth.

### DETAILED DESCRIPTION OF THE INVENTION

The present invention is directed to inherently electrostatic dissipative block copolymers (IDPs) that are subsequently modified to contain a high concentration of acid end groups. These acid end-capped IDP compositions are advantageous because of their improved electrostatic dissipating properties as exemplified by lower surface resistivities compared to IDPs that have not been modified. These acid end-capped IDP compositions may be used alone or in an alloy with other thermoplastic materials as an additive to impart electrostatic dissipating properties.

The acid end-capped IDP compositions of the present invention are useful in applications requiring a thermoplastic material that can dissipate electrostatic charge. Many applications exist in which the acid end-capped IDP compositions may be used including packaging for static sensitive electronic components, clean room glazing and multi-wall sheets used as partitions, fabricated boxes, extruded profiles, molded articles, fibers that do not build up static charge for clothing or carpeting, and coextruded or laminated films containing an electrostatic dissipating layer(s).

The acid end-capped IDP composition comprises:
(A) from about 95 to about 99.99 weight percent of an inherently electrostatic dissipating block copolymer (IDP) comprised of:
   (i) from about 5 to about 85 weight percent of a soft segment of a polyalkylene glycol
      and
   (ii) from about 15 to about 95 weight percent of a hard segment, wherein the hard segment is derived from a polymer having a glass transition temperature or crystalline melting temperature greater than ambient temperature and being reactive with a hydroxyl functionality,
   wherein the weight percents of the soft segment and the hard segment are based on the total weight of components (i) and (ii);
   and
(B) from about 0.01 to about 5 weight percent of an acid end-capping reagent having at an acid functionality of at least two;
wherein the weight percents of the IDP and the acid end-capping reagent are based on the total weight of components (A) and (B); and wherein after formation of the IDP, the IDP is subsequently modified with the acid end-capping reagent to form the acid end-capped IDP composition.

Preferably, the IDP is present from about 95 to about 99.9 weight percent and the acid end-capping reagent is present from about 0.1 to about 5 weight percent. More preferably, the IDP is present from about 97 to about 99.7 weight percent and the acid end-capping reagent is present from about 0.3 to about 3 weight percent.

With reference to component (A), the IDPs prior to undergoing acid end-capping are preferably a polyetherester, a polyetherurethane, or a polyetheresteramide. Many of these IDPs are commercially available materials. A commercial example of polyetherurethane copolymers is Stat-Rite® available from Noveon. Commercial examples of polyetheresteramide copolymers include Pebax® MH1657, Pebax® MV1074 and Irgastat® P22 available from Ciba Specialty Chemicals and Pelestat® NC6321 and Pelestat® NC7530 available from Sanyo Chemical Industries, Ltd.

In an illustrative example of a polyetherurethane-based IDP, a hydroxyl terminated ethylene ether oligomer intermediate having an average molecular weight from about 500 to 5,000 is reacted with a non-hindered diisocyanate and an aliphatic extender glycol to produce the polyetherurethane. The ethylene ether oligomer intermediate may be a polyethylene glycol consisting of repeating ethylene ether units n wherein n is from about 11 to about 115. The non-hindered diisocyanate is an aromatic or cyclic aliphatic diisocyanate. The extender glycol is a non-ether glycol having from 2 to 6 carbon atoms and containing only primary alcohol groups. The polyetherurethane that is produced has an average molecular weight from about 60,000 to 500,000.

An illustrative example of a polyetheresteramide-based IDP comprises a linear saturated aliphatic amide block and a polyether block. The linear saturated aliphatic amide block is formed from a lactam or amino acid having a hydrocarbon chain containing 4 to 14 carbon atoms or from a dicarboxylic acid and a diamine, wherein the diacid is an aliphatic carboxylic diacid having 4 to 40 carbon atoms. The amide block has an average molecular weight between 800 and 5000. The polyether block is formed from linear or branched aliphatic polyalkylene glycols or mixtures where the polyether block molecular weight is from 400 to 3000. The proportion by weight of polyalkylene glycol with respect to the total weight of polyetheresteramide is from 5 to 50 weight percent. The resulting polyetheresteramide has an intrinsic viscosity of from 0.8 to 2.05.

The polyetherester-based IDPs are illustrated in the Examples herein. Commercial polyetherester-based IDPs have not been commercially available in the past as their resistivities have not heretofore been low enough to provide adequate electrostatic discharge. However, by utilizing the acid end-capping of the present invention, polyetherester-based acid end-capped IDP compositions are now commercially viable.

When considering the individual components of the IDPs, the soft segment is preferably present from about 30 to about 65 weight percent and the hard segment is present from about 35 to about 70 weight percent.

The soft segment of the polyalkylene glycol, designated above as component (i), is preferably a polyethylene glycol, polypropylene glycol, polytetramethylene glycol, or polybutylene glycol. The soft segment as defined herein may be a polyalkylene glycol copolymer, a blend of polyalkylene glycols and/or polyalkylene glycol copolymers; or a polyalkylene glycol containing non-hydroxyl end groups. The preferred polyalkylene glycol is polyethylene glycol with a molecular weight range from about 900 to about 8000 grams per mole. The more preferred polyalkylene glycol is polyethylene glycol with molecular weight range from about 1000 to about 3400 grams per mole. The most preferred polyalkylene glycol is polyethylene glycol with molecular weight of 2000 grams per mole.

The hard segment, designated above as component (ii), is preferably derived from polymers such as polyesters, polyurethanes, polyamides, or polycarbonates. Any of these polymers would be suitable that have a glass transition temperature or crystalline melting temperature greater than ambient temperature and are reactive with a hydroxyl functionality.

The acid end-capping reagent, designated above as component (B), may be a cyclic anhydride, a multifunctional acid or ester thereof, or a multifunctional acid chloride or ester thereof. Examples of cyclic anhydrides include, but are not limited to, phthalic anhydride, 1,2,4-benzenetricarboxylic anhydride, 1,2,4,5-benzenetetracarboxylic dianhydride, succinic anhydride, maleic anhydride, 2,3-diphenylmaleic anhydride, 2-phenylglutaric anhydride, homophthalic anhydride, 2-sulfobenzoic acid cyclic anhydride, 3,3',4,4'-benzophenonetetracarboxylic dianhydride, 4-methylphthalic anhydride, 3,6-difluorophthalic anhydride, 3,6-dichlorophthalic anhydride, 4,5-dichlorophthalic anhydride, tetrafluorophthalic anhydride, tetrachlorophthalic anhydride, tetrabromophthalic anhydride, 3-hydroxyphthalic anhydride, 3-nitrophthalic anhydride, 4-nitrophthalic anhydride, diphenic anhydride, 1,8-naphthalic anhydride, 4-chloro-1,8-naphthalic anhydride, 4-bromo-1,8-naphthalic anhydride, 3-nitro-1,8-naphthalic anhydride, 4-nitro-1,8-naphthalic anhydride, 1,4,5,8-naphthalenetetracarboxylic dianhydride, 3,4,9,10-perylenetetracarboxylic dianhydride, methylsuccinic anhydride, 2,2-dimethylsuccinic anhydride, 1,2-cyclohexanedicarboxylic anhydride, hexahydro-4-methylphthalic anhydride, 1,2,3,6-tetrahydrophthalic anhydride, 5-norbornene-2,3-dicarboxylic anhydride, methyl-5-norbornene-2,3-dicarboxylic anhydride, 1,2,3,4-cyclobutanetetracarboxylic dianhydride, bicylco(2.2.2)oct-7-ene-2,3,5,6-tetracarboxylic dianhydride, citraconic anhydride, 2,3-dimethylmaleic anhydride, 1-cylcopentene-1,2-dicarboxylic anhydride, 3,4,5,6-tetrahydrophthalic anhydride, bromomaleic anhydride, dichloromaleic anhydride, 1,4,5,6,7,7-hexachloro-5-norbornene-2,3-dicarboxylic anhydride, glutaric anhydride, 3-methylglutaric anhydride, 2,2-dimethylglutaric anhydride, 3,3-dimethylglutaric anhydride, 3-ethyl-3-methylglutaric anhydride, 3,3-tetramethyleneglutaric anhydride, hexafluoroglutaric anhydride, and diglycolic anhydride.

Examples of multifunctional acids include, but are not limited to, terephthalic acid, isophthalic acid, phthalic acid, 1,2,3-benzenetriarboxylic acid hydrate, 1,2,4-benzenetricarboxylic acid, 1,3,5-benzenetricarboxylic acid, 1,2,4,5-benzenetetracarboxylic acid, mellitic acid, 3-fluorophthalic acid, 4-methylphthalic acid, 2-bromoterephthalic acid, 4-bromoisophthalic acid, 2-methoxyisophthalic acid, 1,4-phenylenedipropionic acid, 5-tert-burylisophthalic acid, 4,5-dichlorophthalic acid, tetrafluoroterephthalic acid, tetrafluoroisophthalic acid, tetrafluorophthalic acid, diphenic acid, 4,4'-biphenyldicarboxylic acid, 1,4-naphthalenedicarboxylidc acid, 2,3-naphthalenedicarboxylic acid, 2,6-napthalenedicarboxylic acid, 1,4,5,8-naphthalenetetracarboxylic acid hydrate, 2,7-di-tert-butyl-9,9'dimethyl-4,5-xanthenedicarboxylic acid, phenylmalonic acid, benzylmalonic acid, phenylsuccinic acid, 3-phenylglutaric acid, 1,2-phenylenediacetic acid, 1,2-phenylenedioxydiacetic acid, 1,3-phenylenediacetic acid, 1,4-phenylenediacetic acid, homophthalic acid, 4-carboxyphenoxyacetic acid, 4,4'-oxybis(benzoic acid), 4,4'-sulfonyldibenzoic acid, oxalic acid, diglycolic acid, malonic acid, methyl malonic acid, ethylmalonic acid, butyl malonic acid, dimethylmalonic acid, diethyl malonic aid, succinic acid, methylsuccinic acid, 2,2-dimethyl succinic acid, 2-ethyl-2-methylsuccinic acid, 2,3-dimethylsuccinic acid, glutaric acid, 2-methylglutaric acid, 3-methylglutaric acid, 2,2-dimethylglutaric acid, 2,4-dimethylglutaric acid, 3,3-dimethylglutaric acid, adipic acid, 3-methyladipic acid, 2,2,5,5-tetramethylhexanedioic acid, pimelic acid, suberic acid, azelaic acid, 1,10-decanedicarboxylic acid, sebacic acid, undecanedioic acid, 1,11-undecanedicarboxylic acid, 1,12-dodecanedicarboxylic acid, hexadecanedioic acid, docosanedioic acid, tetracosanedioic acid, tricarballylic acid, beta-methyltricarballylic acid, 1,2,3,4-butanetetracarboxylic acid, itaconic acid, maleic acid, fumaric acid, citraconic acid, mesaconic acid, glutaconic acid, hydromuconic acid, traumatic acid, muconic acid, aconitic acid, chlorosuccinic acid, bromosuccinic acid, 2-bromotetradecanoic acid, 2-bromohexadecanoic acid, chlorosuccinic acid, bromosuccinic acid, 2,3-dibromosuccinic acid, hexafluoroglutaric acid, perfluoroadipic acid, 2,2-bis(hydroxymethyl)propionic acid, tetrahydrofuran-2,3,4,5-tetracarboxylic acid, chelidonic acid, 1,3-acetonedicarboxylic acid, 3-oxoadipic acid, 4-ketopimelic acid, 5-oxoacelaic acid, 1,2-cyclopentanedicarboxylic acid, 3,3-tetramethyleneglutaric acid, camphoric acid, cyclohexylsuccinic acid, 1,1-cyclohexanediacetic acid, 1,2-cyclohexanedicarboxylic acid, 1,3-cyclohexanedicarboxylic acid, 1,4-cyclohexanedicarboxylic acid, 1,3-adamantanedicarboxylic acid, cis-5-norbornene-endo-2,3-dicarboxylic acid, 1,3,5-cyclohexanetricarboxylic acid, 1,2,3,4-cyclobutanetetracarboxylic acid, and 1,2,3,4,5,6-cyclohexanehexacarboxylic acid.

Multifunctional acid chlorides may also be used as acid end-capping reagents, but are not preferred due to the corrosive nature of the hydrochloric acid by-product. In addition, esters derived from multifunctional acids or multifunctional acid chlorides may also be used. Mixtures of acid end-capping reagents may also be used.

The preferred acid end-capping reagents are cyclic anhydrides and diacids. Most preferably, the acid end-capping reagent is selected from the group consisting of phthalic anhydride, terephthalic acid, isophthalic acid and adipic acid.

The acid end-capped IDP compositions of the present invention are preferably used as additives to thermoplastic materials thereby producing an acid end-capped IDP/thermoplastic alloy. The alloy because of its properties is more readily suitable for making articles of manufacture. The alloys are suitable to manufacture articles such as films, fibers, profiles, molded articles, and multilayer articles thereof containing at least one electrostatic dissipating layer.

The acid end-capped IDP compositions in the alloy provide electrostatic dissipating properties to articles of manufacture. The alloy preferably comprises from about 10 to about 50 weight percent the acid end-capped IDP composition and from about 50 to about 90 weight percent the thermoplastic material, based on the total weight of the alloy. More preferably, the acid end-capped IDP composition is present from about 25 to about 35 weight percent and the thermoplastic material is present from about 65 to about 75 weight percent.

Examples of thermoplastic materials that electrostatic dissipating copolymers may be alloyed with include, but are not limited to, polyvinyl chloride, copolymers of polyvinyl chloride, chlorinated polyvinyl chloride, copolymers of styrene and acrylonitrile, terpolymers of styrene, acrylonitrile, and diene rubber, copolymers of styrene and acrylonitrile modified with an acrylate elastomer, copolymers of styrene and acrylonitrile modified with ethylene propylene diene monomer rubber, polystyrenes and rubber modified impact polystyrenes, polyamides, polycarbonates, thermoplastic polyesters such as polybutylene terephthalate and polyethylene terephthalate, thermoplastic copolyesters such as polyethylene-co-1,4-cyclohexylene terephthalate, polyetherester block copolymers, polyetheramide block copolymers, polyetherurethane block copolymers, polyurethanes, polyphenylene oxide, polyacetals, cellulosics, acrylics such as polymethylmethacrylate, and polyolefins such as polyethylene, polypropylene, and the like.

Further, other common additives such as antioxidants, light stabilizers, processing stabilizers, flame retardants, pigments, impact modifiers, compatibilizers, and the like may be added to the acid end-capped IDP compositions. Such additions may be made during polymerization and/or post-polymerization melt processing operations and/or to the alloy during melt processing operations.

The present invention further comprises processes for preparing the acid end-capped IDP compositions. In one method to obtain the acid end-capped IDP composition of the present invention, all of the components except the acid end-capping reagent(s) are added together at the start of the reaction from which the acid end-capped IDP composition is synthesized. Thus, the IDP is formed prior to the addition of the acid end-capping reagent. More specifically, a process for preparing an acid end-capped IDP composition comprises the steps of:
(A) forming in a reactor an inherently electrostatic dissipating block copolymer (IDP) comprised of (i) from about 5 to about 85 weight percent of a soft segment of a polyalkylene glycol and (ii) from about 15 to about 95 weight percent of a hard segment, wherein the hard segment is derived from a polymer having a glass transition temperature or crystalline melting temperature greater than ambient temperature and being reactive with a hydroxyl functionality and wherein the weight percents of the soft segment and the hard segment are based on the total weight of components (i) and (ii);
(B) then, adding in the reactor from about 0.01 to about 5 weight percent of an acid end-capping reagent having an acid functionality of at least two to the reaction product of step (A) to form an acid end-capped IDP composition, the weight percent of the acid end-capping reagent is based on the total weight of the reaction product of step (A) and the acid end-capping reagent; and
(C) removing from the reactor an acid end-capped IDP composition.

Preferably the acid end-capping reagent is added to step (B) from about 0.1 to about 5 weight percent, more preferably from about 0.3 to about 3 weight percent. Optionally, the process further comprises between step (B) and step (C), the step of removing unreacted acid end-capping reagent from the reactor.

In one preferred embodiment of this process, the IDP is a polyetherester. In step (A), the IDP is preferably formed by the steps comprised of:
(1) reacting a first glycol, a polyalkylene glycol and a diacid or a diester of a diacid at sufficient temperatures and pressures to effect esterification or transesterification; and
(2) then, polycondensing the product of step (1) at sufficient temperatures and pressures to form an inherently electrostatic dissipating block copolymer (IDP) having a polyetherester composition and an inherent viscosity of from about 0.4 to about 1.4 dUg.

An illustrative example of step (A) for a process for manufacturing the polyetherester from the art includes U.S. Patent 4,256,861. This patent discloses interchange reactions as well as polymerization processes. Step (A)(1), which is typically known as esterification or ester interchange, is conducted under an inert atmosphere at a temperature of 150 to 250°C for 0.5 to 8 hours, preferably from 180 to 230°C for 1 to 4 hours. The glycols, depending on their reactivities and the specific experimental conditions employed, are normally used in molar excess of 1.05 to 3 moles per total moles of acid-functional monomers. Step (A)(2), which is typically known as polycondensation, is conducted under a reduced pressure at a temperature of 200 to 350°C, and more preferably 240 to 290°C for 0.1 to 8 hours, preferably 0.25 to 4 hours. The reactions of these stages are facilitated by appropriate catalysts, especially those known in the art, such as alkoxy titanium compounds, alkali metal hydroxides and alcoholates, salts of organic carboxylic acids, alkyl tin compounds, metal oxides and so forth.

In another preferred embodiment of this process, the IDP is a polyetherurethane. In step (A), the IDP is preferably formed by reacting the polyalkylene glycol, a non-hindered diisocyanate, and an aliphatic extender glycol at sufficient temperatures and pressures to effect polymerization. An illustrative example of step (A) for a process for manufacturing a polyetherurethane from the art includes U.S. Patent 5,159,053. In this example, polyetherurethanes are produced by reacting an ethylene ether oligomer glycol intermediate, an aromatic or aliphatic non-hindered diisocyanate, and an extender glycol. On a mole basis, the amount of extender glycol for each mole of oligomer glycol intermediate is from about 0.1 to about 3.0 moles, preferably from about 0.2 to about 2.1 moles, and more preferably from about 0.5 to about 1.5 moles. On a mole basis, the high molecular weight polyurethane polymer comprises from about 0.97 to about 1.02 moles, and preferably about 1.0 moles of nonhindered diisocyanate for every 1.0 total moles of both the extender glycol and the oligomer glycol (i.e. extender glycol +oligomer glycol =1.0). The hydroxyl terminated ethylene ether oligomer intermediate, the non-hindered diisocyanate, and the aliphatic extender glycol are co-reacted simultaneously in a one-shot polymerization process at a temperature above about 100°C and usually about 120°C., whereupon the reaction is exothermic and the reaction temperature is increased to about 200°C to 250°C.

In still another preferred embodiment of this process, the IDP is a polyetheresteramide. In step (A), the IDP is preferably formed by reacting the polyalkylene glycol with a dicarboxylic polyamide at sufficient temperatures and pressures to effect polymerization. An illustrative example of step (A) for a process for manufacturing a polyetheresteramide from the art includes U.S. Patent 4,230,838. In this example, the method of preparing polyetheresteramide block copolymers comprises reacting at an elevated temperature and under high vacuum a dicarboxylic polyamide with a polyalkylene glycol in the presence of polycondensation catalyst(s) known in the art. The dicarboxylic polyamides are obtained by conventional methods currently used for preparing such polyamides such as polycondensation of a lactam, an amino acid, or a diacid and a diamine. These polycondensation reactions are carried out in the presence of an excess amount of a diacid. The polycondensation reaction for preparing the polyetheresteramide is carried out in the presence of the catalyst under a high vacuum on the order of 0.05 to 5 mm Hg at temperatures above the melting point of the constituents used, said temperatures being selected so that the reacting constituents are maintained in the fluid state; these temperatures are comprised between 100°C and 400°C, and preferably between 200°C and 300°C. The reaction time may vary from 0.15 hours to 10 hours, and is preferably comprised between 1 hour and 7 hours.

To complete the process of each of the preferred embodiment for step (A) above, the IDP of step (A) is further processed in step (B) to form the acid end-capped IDP compositions of a polyetherester, polyetherurethane and polyetheresteramide, respectively. Step (B) is conducted during which the acid end-capping reagent(s) are added to the reaction vessel under an inert atmosphere at a temperature of 200 to 350°C, and more preferably 240 to 290°C for 0.1 to 1 hours, preferably 0.25 to 0.5 hours. An optional step to remove unreacted end-capping reagent is conducted under a reduced pressure at a temperature of 200 to 350°C, and more preferably 240 to 290°C for 0.1 to 1 hours, preferably 0.1 to 0.25 hours. Stirring or appropriate conditions are used in all steps to ensure adequate heat transfer and surface renewal of the reaction mixture.

In an alternative method for producing the acid end-capped IDP composition, the acid end-capping reagent and a previously prepared IDP (such as those products commercially available under the trade names Stat-Rite™, Pebax® , Irgastat® , and Pelestat™) are melt blended together during a secondary melt processing operation using conventional blending equipment such as single screw extruders, twin screw extruders, Brabender Plastographs, Sigma blade mixers, and injection molding machines. The acid end-capped IDP compositions are prepared by melt processing at temperatures above the melting point of the IDP, which is typically between 200°C to 350°C and preferably between 250°C to 290°C.

More specifically, a process for preparing an acid end-capped IDP composition comprises the step of combining in a secondary melt phase operation from about 95 to about 99.99 weight percent of an inherently electrostatic dissipating block copolymer (IDP) and from about 0.01 to about 5 weight percent of an acid end-capping reagent having an acid functionality of at least two to form an acid end-capped IDP composition. The secondary melt phase operation is conducted at a temperature above the melting point of the IDP. The IDP is comprised of from about 5 to about 85 weight percent of a soft segment of a polyalkylene glycol and from about 15 to about 95 weight percent of a hard segment. The hard segment is derived from a polymer having a glass transition temperature or crystalline melting temperature greater than ambient temperature and being reactive with a hydroxyl functionality. The weight percents for the IDP and the acid end-capping reagent are based on the total weight of the acid end-capped IDP composition. The weight percents for the soft segment and the hard segment are based on the total weight of the IDP. Preferably, the secondary melt phase operation is conducted in a twin screw extruder.

A preferred melt process further comprises the step of removing unreacted acid end-capping reagent from the secondary melt phase operation. More preferably, in this step a devolatilization zone(s) removes the unreacted acid end-capping reagent(s).

As for the formation of the alloy, in one process the acid end-capping reagent is added along with the IDP and thermoplastic material during the melt processing operation that is utilized to form the IDP/thermoplastic alloys. More specifically, a process for preparing an alloy of an acid end-capped IDP composition and a thermoplastic base material comprises the step of blending in a melt processing operation an inherently electrostatic dissipating block copolymer (IDP), an acid end-capping reagent having an acid functionality of at least two and a thermoplastic base material. The IDP is comprised of (i) from about 5 to about 85 weight percent of a soft segment of a polyalkylene glycol and (ii) from about 15 to about 95 weight percent of a hard segment. The hard segment is derived from a polymer having a glass transition temperature or crystalline melting temperature greater than ambient temperature and being reactive with a hydroxyl functionality. The weight percents of the soft segment and the hard segment are based on the total weight of components (i) and (ii). The amount of acid end-capping reagent is added at from about 0.01 to about 5 weight percent based on the weight of the IDP and acid end-capping reagent. The amount of thermoplastic base material is added at from about 50 to about 90 weight percent, based on the weight of the acid end-capped IDP and thermoplastic material.

Alternatively, the alloy is prepared by the addition of acid end-capping reagent to an IDP/thermoplastic alloy previously prepared (such as EastaStat™ from the Eastman Chemical Company, Stat-Rite®, PermaStat® from RTP Corporation, Stat-Loy® from LNP Engineering Plastics, Inc., and Pre-Elec from Premix Thermoplastics, Inc.) during secondary melt phase operations.

More specifically, a process for preparing an alloy of an acid end-capped IDP composition and a thermoplastic base material comprises the step of combining in a secondary melt phase operation from about 97.5 to about 99.999 weight percent of an IDP/thermoplastic alloy and from about 0.001 to about 2.5 weight percent of an acid end-capping reagent having an acid functionality of at least two to form an alloy of an acid end-capped IDP composition and a thermoplastic base material. The secondary melt phase operation is conducted at a temperature above the melting point of the IDP. The IDP/thermoplastic alloy is comprised of from about 10 to about 50 weight percent of an IDP and from about 90 to about 50 weight percent of a thermoplastic material. The IDP is comprised of from about 5 to about 85 weight percent of a soft segment of a polyalkylene glycol and from about 15 to about 95 weight percent of a hard segment derived from a polymer having a glass transition temperature or crystalline melting temperature greater than ambient temperature and being reactive with a hydroxyl functionality. The weight percents for the IDP/thermoplastic alloy and the acid end-capping reagent are based on the total weight of the alloy of the acid end-capped IDP composition and the thermoplastic base material. The weight percents for the IDP and thermoplastic material are based on the total weight of the IDP/thermoplastic alloy. The weight percents for the soft segment and the hard segment are based on the total weight of the IDP.

Preferably, the acid end-capping reagent is combined in the secondary melt phase operation from about 0.1 to about 2.5 weight percent, and more preferably from about 0.03 to about 1.5 weight percent. Preferably, the secondary melt phase operation is conducted in a twin screw extruder.

A preferred process further comprises the step of removing unreacted acid end-capping reagent from the secondary melt phase operation. More preferably, in this step a devolatilization zone(s) removes the unreacted acid end-capping reagent(s).

### EXAMPLES

The invention will now be illustrated by examples. The examples are not intended to be limiting of the scope of the present invention. In conjunction with the detailed description above, the examples provide further understanding and demonstrate some of the preferred embodiments of the invention. The following Examples 1-12 illustrate the effects of acid end-capping on the electrostatic dissipating properties of IDPs. Examples 13-42 illustrate the effects of acid end-capping on the electrostatic dissipating properties of alloys containing IDPs and thermoplastic materials.

Inherent Viscosity (IV) was measured at 25°C in a solvent mixture consisting of 60 percent by weight phenol and 40 percent by weight tetrachloroethane.

### Example 1

A typical synthetic procedure is described below. A 1000 ml round bottom flask equipped with a ground glass head, agitator shaft, nitrogen inlet, a sidearm to allow for removal of volatile materials, and ground glass joint connected to a powder addition funnel was charged with 174.77 grams (0.90 moles) of dimethyl terephthalate, 103.62 grams (1.67 moles) of ethylene glycol, 195.76 grams (0.14 moles) of poly(ethylene glycol) having a Mₙ of 1450 gram per mole (PEG1450), 1.80 grams of antioxidant, and 1.80 ml of a 1.01 wt/vol% solution of titanium(IV) isopropoxide in n-butanol. The flask was purged with nitrogen and immersed in a Belmont metal bath at 200°C for 65 minutes and 210°C for 130 minutes under a slow sweep of nitrogen with sufficient agitation. After elevating the temperature to 275°C, the pressure was gradually reduced from 760 mm to 0.2 mm over the course of 15 minutes and held for an additional 31 minutes to allow for the polycondensation reaction to occur. The vacuum was then displaced with a nitrogen atmosphere and 3.60 grams (0.024 moles) of phthalic anhydride was added via the powder addition funnel to the 1000 ml flask over the course of 5 minutes. After an additional 15 minutes, the pressure was again gradually reduced from 760 mm to 0.2 mm over the course of 15 minutes and held for an additional 15 minutes to allow for the removal of any unreacted phthalic anhydride. The vacuum was then displaced with a nitrogen atmosphere and the opaque, amber polymer was allowed to cool and crystallize for at least 60 minutes before removal from the flask. An inherent viscosity of 0.75 dl/g was determined for the recovered polymer according to ASTM D3835-79. Gel permeation chromatography (GPC) analysis of the copolymer in a 5% hexafluro-2-propanol/95% methylene chloride solvent system indicates a number average molecular weight of 3,219 grams per mole. Nuclear magnetic resonance (NMR) analysis indicated that the actual glycol compositional ratio contained 84.9 mol% ethylene glycol, 15.1 mol% PEG1450, and the actual acid compositional ratio contained 98.8 mol% terephthalic acid and 1.2 mol% phthalic acid. The NMR analysis correlated to an acid end-capped IDP composition comprised of 53.87 wt% PEG1450, 36.43 wt% terephthalic acid, 9.31 wt% ethylene glycol, and 0.39 wt% phthalic acid. Potentiometric titrations indicated a carboxyl end group concentration of 35.7 meq per kg. A glass transition temperature (T_{g}) of -42.0°C and crystalline melting points (Tₘ) of 20.5 and 204°C were obtained from thermal analysis by differential scanning calorimetry. A compression molded film of the resulting polymer exhibited a surface resistivity of 1.3 x 10⁹ ohms per square at 22°C and 50% relative humidity according to the ANSI ESD S11.11 standard test method entitled "Surface Resistance Measurements of Static Dissipative Planar Materials."

### Example 2

An acid end-capped IDP composition of a polyetherester was obtained by the same method as described in Example 1, except that 10.80 grams (0.073 moles) of phthalic anhydride was added as the acid end-capping reagent. An inherent viscosity of 0.68 dl/g was determined for the recovered polymer according to ASTM D3835-79. GPC analysis of the copolymer in a 5% hexafluro-2-propanol/95% methylene chloride solvent system indicated a number average molecular weight of 2,265 grams per mole. NMR analysis indicated that the actual glycol compositional ratio contained 84.4 mol% ethylene glycol, 15.6 mol% PEG1450, and the actual acid compositional ratio contained 97.4 mol% terephthalic acid and 2.6 mol% phthalic acid. NMR analysis correlated to an acid end-capped IDP composition comprised of 54.74 wt% PEG1450, 35.33 wt% terephthalic acid, 9.10 wt% ethylene glycol, and 0.83 wt% phthalic acid. Potentiometric titrations indicated a carboxyl end group concentration of 63.07 meq per kg. A glass transition temperature (T_{g}) of -44.1°C and crystalline melting points (Tₘ) of 20.2 and 207.5°C were obtained from thermal analysis by differential scanning calorimetry. A compression molded film of the resulting polymer exhibited a surface resistivity of 1.2 x 10⁹ ohms per square at 22°C and 50% relative humidity according to ANSI ESD S11.11.

### Example 3

An acid end-capped IDP composition of a polyetherester was obtained by the same method as described in Example 1, except that 17.99 grams (0.121 moles) of phthalic anhydride was added as the acid end-capping reagent. An inherent viscosity of 0.57 dl/g was determined for the recovered polymer according to ASTM D3835-79. GPC analysis of the copolymer in a 5% hexafluro-2-propanol/95% methylene chloride solvent system indicated a number average molecular weight of 2,089 grams per mole. NMR analysis indicated that the actual glycol compositional ratio contained 84.5 mol% ethylene glycol, 15.5 mol% PEG1450, and the actual acid compositional ratio contained 96.1 mol% terephthalic acid and 3.9 mol% phthalic acid. NMR analysis correlated to an acid end-capped IDP composition comprised of 54.61 wt% PEG1450, 34.99 wt% terephthalic acid, 9.15 wt% ethylene glycol, and 1.25 wt% phthalic acid. Potentiometric titrations indicated a carboxyl end group concentration of 85.12 meq per kg. A glass transition temperature (T_{g}) of -44.9°C and crystalline melting points (Tₘ) of 21.2 and 198.6°C were obtained from thermal analysis by differential scanning calorimetry. A compression molded film of the resulting polymer exhibited a surface resistivity of 1.1 x 10⁹ ohms per square at 22°C and 50% relative humidity according to ANSI ESD S11.11.

### Example 4 (Comparative)

An IDP of a polyetherester for comparing with the acid end-capped IDP composition of a polyetherester was obtained by the same method as described in Example 1, except that no acid end-capping reagent was utilized in the synthetic procedure. An inherent viscosity of 0.76 dl/g was determined for the recovered polymer according to ASTM D3835-79. GPC analysis of the copolymer in a 5% hexafluro-2-propanol/95% methylene chloride solvent system indicated a number average molecular weight of 3,039 grams per mole. NMR analysis indicated that the actual glycol compositional ratio contained 84.1 mol% ethylene glycol, 15.9 mol% PEG1450, and the actual acid composition contained 100 mol% terephthalic acid. NMR analysis correlated to an IDP comprised of 55.17 wt% PEG1450, 35.86 wt% terephthalic acid, and 8.97 wt% ethylene glycol. Potentiometric titrations indicated a carboxyl end group concentration of 5.56 meq per kg. A glass transition temperature (T_{g}) of -46.05°C and crystalline melting points (Tₘ) of 20.21 and 206.03°C were obtained from thermal analysis by differential scanning calorimetry. A compression molded film of the resulting polymer exhibited a surface resistivity of 2.1 x 10⁹ ohms per square at 22°C and 50% relative humidity according to ANSI ESD S11.11.

### Example 5

An acid end-capped IDP composition of a polyetherester was obtained by the same method as described in Example 1, except that 198.00 grams (0.10 moles) of polyethylene glycol having a Mₙ of 2000 grams per mole (PEG2000) was utilized as the polyether segment and 10.80 grams (0.073 moles) of phthalic anhydride was added as the acid end-capping reagent. An inherent viscosity of 1.15 dl/g was determined for the recovered polymer according to ASTM D3835-79. GPC analysis of the copolymer in a 5% hexafluro-2-propanol/95% methylene chloride solvent system indicated a number average molecular weight of 2,031 grams per mole. NMR analysis indicated that the actual glycol compositional ratio contained 88.4 mol% ethylene glycol, 11.6 mol% PEG2000, and the actual acid compositional ratio contained 98.5 mol% terephthalic acid and 1.5 mol% phthalic acid. NMR analysis correlated to an acid end-capped IDP composition comprised of 55.20 wt% PEG2000, 35.00 wt% terephthalic acid, 9.34 wt% ethylene glycol, and 0.47 wt% phthalic acid. Potentiometric titrations indicated a carboxyl end group concentration of 43.41 meq per kg. A glass transition temperature (T_{g}) of -48.21°C and crystalline melting points (Tₘ) of 27.02 and 208.65°C were obtained from thermal analysis by differential scanning calorimetry. A compression molded film of the resulting polymer exhibited a surface resistivity of 5.3 x 10⁸ ohms per square at 22°C and 50% relative humidity according to ANSI ESD S11.11.

### Example 6 (Comparative)

An IDP of a polyetherester for comparing with the acid end-capped IDP composition of a polyetherester of the invention was obtained by the same method as described in Example 5, except that no acid end-capping reagent was utilized in the synthetic procedure. An inherent viscosity of 1.22 dl/g was determined for the recovered polymer according to ASTM D3835-79. GPC analysis of the copolymer in a 5% hexafluro-2-propanol/95% methylene chloride solvent system indicated a number average molecular weight of 2,572 grams per mole. NMR analysis indicated that the actual glycol compositional ratio contained 88.4 mol% ethylene glycol, 11.6 mol% PEG2000, and the actual acid composition contained 100 mol%. NMR analysis correlated to an IDP comprised of 55.16 wt% PEG2000, 35.51 wt% terephthalic acid, and 9.33 wt% ethylene glycol. Potentiometric titrations indicated a carboxyl end group concentration of 7.79 meq per kg. A glass transition temperature (T_{g}) of - 46.05°C and crystalline melting points (Tₘ) of 20.21 and 206.03°C were obtained from thermal analysis by differential scanning calorimetry. A compression molded film of the resulting polymer exhibited a surface resistivity of 1.5 x 10⁹ ohms per square at 22°C and 50% relative humidity according to ANSI ESD S11.11.

### Example 7

An acid end-capped IDP composition of a polyetherester was obtained by the same method as described in Example 5, except that 196.01 grams (0.06 moles) of polyethylene glycol having a Mₙ of 3350 grams per mole (PEG3350) was utilized as the ether segment. An inherent viscosity of 1.03 dl/g was determined for the recovered polymer according to ASTM D3835-79. GPC analysis of the copolymer in a 5% hexafluro-2-propanol/95% methylene chloride solvent system indicated a number average molecular weight of 1,963 grams per mole. NMR analysis indicated that the actual glycol compositional ratio contained 93.1 mol% ethylene glycol, 6.9 mol% PEG3350, and the actual acid compositional ratio contained 98.4 mol% terephthalic acid and 1.6 mol% phthalic acid. NMR analysis correlated to an acid end-capped IDP composition comprised of 54.92 wt% PEG3350, 34.79 wt% terephthalic acid, 9.79 wt% ethylene glycol, and 0.50 wt% phthalic acid. Potentiometric titrations indicated a carboxyl end group concentration of 43.73 meq per kg. Crystalline melting points (Tₘ) of 36.62 and 223.14°C were obtained from thermal analysis by differential scanning calorimetry. A compression molded film of the resulting polymer exhibited a surface resistivity of 5.0 x 10⁸ ohms per square at 22°C and 50% relative humidity according to ANSI ESD S11.11.

### Example 8 (Comparative)

An IDP of a polyetherester for comparing with the acid end-capped IDP composition of a polyetherester of the invention was obtained by the same method as described in Example 7, except that no acid end-capping reagent was utilized in the synthetic procedure. An inherent viscosity of 1.27 dl/g was determined for the recovered polymer according to ASTM D3835-79. GPC analysis of the copolymer in a 5% hexafluro-2-propanol/95% methylene chloride solvent system indicated a number average molecular weight of 2,274 grams per mole. NMR analysis indicated that the actual glycol compositional ratio contained 93.1 mol% ethylene glycol, 6.9 mol% PEG3350, and the actual acid composition contained 100 mol% terephthalic acid. NMR analysis correlated to an IDP comprised of 54.89 wt% PEG3350, 35.33 wt% terephthalic acid, and 9.78 wt% ethylene glycol. Potentiometric titrations indicated a carboxyl end group concentration of 6.33 meq per kg. A compression molded film of the resulting polymer exhibited a surface resistivity of 1.9 x 10⁹ ohms per square at 22°C and 50% relative humidity according to ANSI ESD S11.11.

### Example 9

An acid end-capped IDP composition of a polyetherester was obtained by the same method as described in Example 1, except that the apparatus was initially charged with 135.95 grams (0.70 moles) of dimethyl terephthalate, 76.53 grams (1.23 moles) of ethylene glycol, 243.65 grams (0.17 moles) of poly(ethylene glycol having a Mₙ of 1450 grams per mole (PEG1450), 1.84 grams of antioxidant, and 1.40 mL of a 1.25 wt/vol% solution of titanium(IV) isopropoxide in n-butanol and 8.398 g (.057 moles) of phthalic anhydride was added as the acid end-capping reagent. An inherent viscosity of 0.74 dl/g was determined for the recovered polymer according to ASTM D3835-79. GPC analysis of the copolymer in a 5% hexafluro-2-propanol/95% methylene chloride solvent system indicated a number average molecular weight of 1,739 grams per mole. NMR analysis indicated that the actual glycol compositional ratio contained 74.6 mol% ethylene glycol, 25.4 mol% PEG1450, and the actual acid compositional ratio contained 97.8 mol% terephthalic acid and 2.2 mol% phthalic acid. NMR analysis correlates to an acid end-capped IDP composition comprised of 66.84 wt% PEG1450, 26.60 wt% terephthalic acid, 6.03 wt% ethylene glycol, and 0.53 wt% phthalic acid. Potentiometric titrations indicated a carboxyl end group concentration of 45.71 meq per kg. A compression molded film of the resulting polymer exhibited a surface resistivity of 6.0 x 10⁸ ohms per square at 22°C and 50% relative humidity according to ANSI ESD S11.11.

### Example 10 (Comparative)

An IDP of a polyetherester for comparing with the acid end-capped IDP composition of a polyetherester of the invention was obtained by the same method as described in Example 9, except that no acid end-capping reagent was utilized in the synthetic procedure. An inherent viscosity of 0.67 dl/g was determined for the recovered polymer according to ASTM D3835-79. GPC analysis of the copolymer in a 5% hexafluro-2-propanol/95% methylene chloride solvent system indicates a number average molecular weight of 2,414 grams per mole. NMR analysis indicated that the actual glycol compositional ratio contained 74.4 mol% ethylene glycol, 25.6 mol% PEG1450, and the actual acid composition contained 100 mol% terephthalic acid. NMR analysis correlates to an IDP comprised of 66.98 wt% PEG1450, 27.04 wt% terephthalic acid, and 5.98 wt% ethylene glycol. Potentiometric titrations indicated a carboxyl end group concentration of 5.74 meq per kg. A compression molded film of the resulting polymer exhibited a surface resistivity of 9.5 x 10⁸ ohms per square at 22°C and 50% relative humidity according to ANSI ESD S11.11.

### Example 11

An acid end-capped IDP composition of a polyetherester was obtained by the same method as described in Example 9, except that 243.65 grams (0.17 moles) of poly(ethylene glycol) having a Mₙ of 2000 grams per mole (PEG2000) was utilized as the polyether segment. An inherent viscosity of 1.18 dl/g was determined for the recovered polymer according to ASTM D3835-79. GPC analysis of the copolymer in a 5% hexafluro-2-propanol/95% methylene chloride solvent system indicated a number average molecular weight of 1,450 grams per mole. NMR analysis indicated that the actual glycol compositional ratio contained 81.6 mol% ethylene glycol, 18.4 mol% PEG2000, and the actual acid compositional ratio contained 98.3 mol% terephthalic acid and 1.7 mol% phthalic acid. NMR analysis correlated to an acid end-capped IDP composition comprised of 66.51 wt% PEG2000, 26.53 wt% terephthalic acid, 6.55 wt% ethylene glycol, and 0.40 wt% phthalic acid. Potentiometric titrations indicated a carboxyl end group concentration of 32.54 meq per kg. A compression molded film of the resulting polymer exhibited a surface resistivity of 4.1 x 10⁸ ohms per square at 22°C and 50% relative humidity according to ANSI ESD S11.11.

### Example 12 (Comparative)

An IDP of a polyetherester for comparing with the acid end-capped IDP composition of a polyetherester of the invention was obtained by the same method as described in Example 11, except that no acid end-capping reagent was utilized in the synthetic procedure. An inherent viscosity of 1.28 dl/g was determined for the recovered polymer according to ASTM D3835-79. GPC analysis of the copolymer in a 5% hexafluro-2-propanol/95% methylene chloride solvent system indicated a number average molecular weight of 1,556 grams per mole. NMR analysis indicated that the actual glycol compositional ratio contained 81.2 mol% ethylene glycol, 18.8 mol% PEG2000, and the actual acid composition contained 100 mol% terephthalic acid. NMR analysis indicated that the IDP was comprised of 66.98 wt% PEG2000, 26.60 wt% terephthalic acid, and 6.42 wt% ethylene glycol. Potentiometric titrations indicated a carboxyl end group concentration of 6.94 meq per kg. A compression molded film of the resulting polymer exhibited a surface resistivity of 8.3 x 10⁸ ohms per square at 22°C and 50% relative humidity according to ANSI ESD S11.11.

### THE EFFECT OF ACID END GROUPS ON THE Rₛ OF INHERENTLY ELECTROSTATIC DISSIPATING BLOCK COPOLYMERS

Tables 1-5 summarize the electrostatic dissipating properties of the IDPs and acid end-capped IDP compositions described by Examples 1-12. As shown, all of the examples of the acid end-capped IDP compositions that include phthalic anhydride addition during polymerization exhibited a higher concentration of acid end groups than the corresponding IDP that was not end-capped. In addition, the examples of the acid end-capped IDP compositions with the higher acid end group concentration exhibited lower Rₛ than the corresponding IDP that was not end-capped. All of the acid end-capped IDP compositions exhibited lower Rₛ regardless of the polyether molecular weight or the level of polyether incorporation in the IDP. These examples show that the addition of a cyclic anhydride acid end-capping reagent during the polymerization of an IDP increases the acid end group concentration and improves the electrostatic dissipating properties as exhibited by lower Rₛ. ΔRₛ indicates a percent reduction in surface resistivity achieved via acid end capping.

**Table 1**

| Example | Wt% PEG1450 | Wt% PA | [Carboxyl End Group] (meq per kg) | (Rₛ) (ohm per sq) | ΔRₛ (%) |
|---|---|---|---|---|---|
| 1 | 54 | 0.39 | 35.66 | 1.3 x 10⁹ | 38 |
| 2 | 55 | 0.83 | 63.07 | 1.2 x 10⁹ | 43 |
| 3 | 55 | 1.25 | 85.12 | 1.1 x 10⁹ | 48 |
| 4 | 55 | 0.00 | 5.56 | 2.1 x 10⁹ | N/A |

**Table 2**

| Example | Wt% PEG2000 | Wt% PA | [Carboxyl End Group] (meq per kg) | (Rₛ) (ohm per sq) | ΔRₛ (%) |
|---|---|---|---|---|---|
| 5 | 55 | 0.47 | 43.41 | 5.3 x 10⁸ | 65 |
| 6 | 55 | 0.00 | 7.79 | 1.5 x 10⁹ | N/A |

**Table 3**

| Example | Wt% PEG3350 | Wt% PA | [Carboxyl End Group] (meq per kg) | (Rₛ) (ohm per sq) | ΔRₛ (%) |
|---|---|---|---|---|---|
| 7 | 55 | 0.50 | 43.73 | 5.0 x 10⁸ | 74 |
| 8 | 55 | 0.00 | 6.33 | 1.9 x 10⁹ | N/A |

**Table 4**

| Example | Wt% PEG1450 | Wt% PA | [Carboxyl End group] (meq per kg) | (Rₛ) (ohm per sq) | ΔRₛ (%) |
|---|---|---|---|---|---|
| 9 | 67 | 0.53 | 45.71 | 6.0 x 10⁸ | 37 |
| 10 | 67 | 0.00 | 5.74 | 9.5 x 10⁸ | N/A |

**Table 5**

| Example | Wt% PEG2000 | Wt% PA | [Carboxyl End group] (meq per kg) | (Rₛ) (ohm per sq) | ΔRₛ (%) |
|---|---|---|---|---|---|
| 11 | 67 | 0.40 | 32.54 | 4.2 x 10⁸ | 52 |
| 12 | 67 | 0.00 | 6.94 | 8.7 x 10⁸ | N/A |

### Examples 13 to16: Alloys

The following materials were utilized to prepare the alloys:
1. Eastar® PETG 6763 is copolyester based on terephthalic acid, ethylene glycol, and 1,4-cyclohexanedimethanol produced and sold by the Eastman Chemical Company.
2. Pebax® MH1657 is an inherently dissipative polyetheramide block copolymer produced by Atofina Chemicals, Inc. and sold by Ciba Specialty Chemicals Corporation.

Alloys comprised of 59.6 weight percent Eastar® PETG 6763 as the thermoplastic material, 30 weight percent of the compositions described above in Example 1-4, 9.9 weight percent compatibilizer, and 0.5 weight percent antioxidant were prepared on an APV 19-mm twin screw extruder using a feed rate of 5 pounds per hour, a screw speed of 200 RPM, and a melt temperature of 240°C. Cast film samples were subsequently prepared on a 1-inch Killion single screw extruder equipped with a Maddock mixing screw using a screw speed of 115 RPM and a melt temperature of 255°C.

The Rₛ of the alloys measured according to ANSI ESD S11.11 at 50% relative humidity are shown in Table 6. Examples 14 to 16, which included the addition of phthalic anhydride during polymerization, exhibited at least 53 percent lower Rs compared to Example 13 with no acid end-capping reagent. These examples show that the addition of a cyclic anhydride acid end-capping reagent (i.e. phthalic anhydride) during polymerization of an IDP improved electrostatic dissipating properties as exhibited by lower Rₛ.

**Table 6**

| Example | Acid End-Capped IDP Example | Rₛ (ohms per sq) | ΔRₛ (%) |
|---|---|---|---|
| 13^{c} | 4 | 9.1 x 10¹⁰ | N/A |
| 14 | 1 | 4.3 x 10¹⁰ | 53 |
| 15 | 2 | 3.7 x 10¹⁰ | 59 |
| 16 | 3 | 4.2 x 10¹⁰ | 54 |

| | | | |
|---|---|---|---|
| ^{c}Comparative | | | |

### Examples 17-20

The examples illustrate the manufacture of alloys with acid end-capping during melt processing.

Alloys comprised of 59.6 weight percent Eastar® PETG 6763 as the thermoplastic material, (30-X) weight percent of Pebax® MH1657 as the IDP, 9.9 weight percent compatibilizer, 0.5 weight percent antioxidant, and X weight percent phthalic anhydride as the acid end-capping reagent were prepared on a 19-mm APV twin screw extruder using a feed rate of 5 pounds per hour, a screw speed of 200 RPM, and a melt temperature of 240°C. Cast film samples were subsequently prepared on a 1-inch Killion single screw extruder equipped with a Maddock mixing screw using a screw speed of 115 RPM and a melt temperature of 255°C. The Rₛ of the alloys measured according to ANSI ESD S11.11 at 50% relative humidity are shown in Table 7. Examples 18 through 20, which included the addition of phthalic anhydride during the twin screw extrusion process, exhibited at least 78% lower Rₛ compared to Example 17 (no acid end-capping). These examples show that the addition of a cyclic anhydride acid end-capping reagent (i.e. phthalic anhydride) during melt processing of an alloy that includes an IDP (i.e. Pebax® MH1657) improves the electrostatic dissipating properties as exhibited by lower Rₛ.

**Table 7**

| Example | Phthalic Anhydride (wt%) | Rₛ (ohms per sq) | ΔRₛ (%) |
|---|---|---|---|
| 17^{c} | 0 | 1.7 x 10¹⁰ | N/A |
| 18 | 0.3 | 3.7 x 10⁹ | 78 |
| 19 | 0.9 | 3.5 x 10⁹ | 79 |
| 20 | 1.5 | 3.7 x 10⁹ | 78 |

### Examples 21-27

These examples provide a comparison of different acid end-capping reagents added during melt processing.

Alloys comprised of 69.5 weight percent Eastar® PETG 6763 as the thermoplastic material, 29 weight percent Pebax® MH1657 as the IDP, 0.5 weight percent antioxidant, and 1 weight percent cyclic anhydride or multifunctional acid as the acid end-capping reagent were prepared on an APV 19-mm twin screw extruder using a feed rate of 5 pounds per hour, a screw speed of 200 RPM, and a melt temperature of 240°C. Cast film samples were subsequently prepared on a 1-inch Killion single-screw extruder equipped with a Maddock mixing screw using a screw speed of 115 RPM and a melt temperature of 255°C. The Rₛ of the alloys measured according to ANSI ESD S11.11 at 50% relative humidity are shown in Table 8. Examples 23 through 27, which include the addition of cyclic anhydride acid end-capping reagents during the twin screw extrusion process, exhibited at least 60% lower Rₛ compared to Example 22 with no acid end-capping reagent. Examples 26 and 27 show an equivalent reduction in Rₛ by adding either a cyclic anhydride or a diacid acid end-capping reagent. These examples show that the addition of cyclic anhydride or multifunctional acid end-capping reagents during melt processing of an alloy that includes an IDP (i.e. Pebax MH1657) improves the electrostatic dissipating properties as exhibited by lower Rₛ.

**Table 8**

| Example | Acid End-Capping Reagent | Rₛ (ohms per sq) | ΔRₛ (%) |
|---|---|---|---|
| 22^{c} | None | 1.0 x 10¹⁰ | N/A |
| 23 | Phthalic Anhydride | 3.4 x 10⁹ | 66 |
| 24 | 1,2,4-benzenetricarboxylic anhydride | 3.6 x 10⁹ | 64 |
| 25 | 1,2,4,5-benzenetetracarboxylic dianhydride | 3.6 x 10⁹ | 64 |
| 26 | Succinic Anhydride | 4.0 x 10⁹ | 60 |
| 27 | Succinic Acid | 4.0 x 10⁹ | 60 |

### Examples 28-30

These examples provide a comparison of acid end-capping during polymerization versus melt processing.

Alloys comprised of 59.6 weight percent Eastar® PETG 6763 as the thermoplastic material, (30-X) weight percent of the IDPs described in Examples 2 and 4 above, 9.9 weight percent compatibilizer, 0.5 weight percent antioxidant, and X weight percent phthalic anhydride (PA) as the acid end-capping reagent were prepared on an APV 19-mm twin screw extruder using a feed rate of 5 pounds per hour, a screw speed of 200 RPM, and a melt temperature of 240°C. Cast film samples were subsequently prepared on a 1-inch Killion single-screw extruder equipped with a Maddock mixing screw using a screw speed of 115 RPM and a melt temperature of 255°C. The Rₛ of the alloys measured according to ANSI ESD S11.11 at 50% relative humidity are shown in Table 9. Examples 29 and 30, which included phthalic anhydride addition during polymerization and melt processing respectively, exhibited approximately equivalent reduction in Rₛ compared to Example 28 with no acid end-capping reagent. These examples show that the addition of a cyclic anhydride acid end-capping reagent (i.e. phthalic anhydride) either during polymerization or during melt processing improves the electrostatic dissipating properties of an inherently electrostatic dissipating block copolymer-thermoplastic alloy as exhibited by lower Rₛ.

**Table 7**

| Example | IDP Example | PA Added During Polymerization^{a} (wt%) | PA Added During Melt Processing^{a} (wt%) | Rₛ (ohms per sq) | ΔRₛ (%) |
|---|---|---|---|---|---|
| 28^{c} | 4 | 0 | 0 | 9.1 x 10¹⁰ | N/A |
| 29 | 2 | 3 | 0 | 3.7 x 10¹⁰ | 59 |
| 30 | 4 | 0 | 3 | 3.8 x 10¹⁰ | 58 |

| | | | | | |
|---|---|---|---|---|---|
| a. Based upon the total weight of IDP + phthalic anhydride. | | | | | |

### Examples 31-33

These examples provide a comparison of acid end-capping during polymerization versus melt processing.

Alloys comprised of 59.6 weight percent Eastar® PETG 6763 as the thermoplastic material, (30-X) weight percent IDP described in Examples 5 and 6 above, 9.9 weight percent compatibilizer, 0.5 weight percent antioxidant, and X weight percent phthalic anhydride as the acid end-capping reagent were prepared on an APV 19-mm twin screw extruder using a feed rate of 5 pounds per hour, a screw speed of 200 RPM, and a melt temperature of 240°C. Cast film samples were subsequently prepared on a 1-inch Killion single-screw extruder equipped with a Maddock mixing screw using a screw speed of 115 RPM and a melt temperature of 255°C. The surface resistivities (Rₛ) of the alloys measured according to ANSI ESD S11.11 at 50% relative humidity are shown in Table 8. Examples 32 and 33, which included phthalic anhydride addition during polymerization and melt processing respectively, exhibit approximately equivalent reduction in Rₛ compared to Example 31 with no acid end-capping reagent. These examples show that the addition of a cyclic anhydride acid end-capping reagent (i.e. phthalic anhydride) either during polymerization or during melt processing of the alloys improves the electrostatic dissipating properties as exhibited by lower Rₛ.

**Table 8**

| Example | IDP Example | PA Added During Polymerization^{a} (wt%) | PA Added During Melt Processing^{a} (wt%) | Rₛ (ohms per sq) | ΔRₛ (%) |
|---|---|---|---|---|---|
| 31^{c} | 6 | 0 | 0 | 3.4 x 10¹⁰ | N/A |
| 32 | 5 | 3 | 0 | 1.2 x 10¹⁰ | 65 |
| 33 | 6 | 0 | 3 | 1.3 x 10¹⁰ | 62 |

| | | | | | |
|---|---|---|---|---|---|
| a. Based upon the total weight of IDP + phthalic anhydride. | | | | | |

### Examples 34-36

These examples provide a comparison of acid end-capping during polymerization versus melt processing.

Alloys comprised of 59.6 weight percent Eastar® PETG 6763 as the thermoplastic material, (30-X) weight percent of IDPs described in Examples 7 and 8 above, 9.9 weight percent compatibilizer, 0.5 weight percent antioxidant, and X weight percent phthalic anhydride as the acid end-capping reagent were prepared on an APV 19-mm twin screw extruder using a feed rate of 5 pounds per hour, a screw speed of 200 RPM, and a melt temperature of 240°C. Cast film samples were subsequently prepared on a 1-inch Killion single-screw extruder equipped with a Maddock mixing screw using a screw speed of 115 RPM and a melt temperature of 255°C. The surface resistivities (Rₛ) of the alloys measured according to ANSI ESD S11.11 at 50% relative humidity are shown in Table 9. Examples 35 and 36, which included phthalic anhydride addition during polymerization and melt processing respectively, exhibited approximately equivalent reduction in Rₛ compared to Example 34 with no acid-end capping. These examples show that the addition of a cyclic anhydride acid end-capping reagent (i.e. phthalic anhydride) either during polymerization or during melt processing improves the electrostatic dissipating properties of an alloy as exhibited by lower Rₛ.

**Table 9**

| Example | IDP Example | PA Added During Polymerization^{a} (wt%) | PA Added During Melt Processing^{a} (wt%) | Rₛ (ohms per sq) | ΔRₛ^{b} (%) |
|---|---|---|---|---|---|
| 34^{c} | 8 | 0 | 0 | 5.6 x 10¹⁰ | N/A |
| 35 | 7 | 3 | 0 | 2.1 x 10¹⁰ | 63 |
| 36 | 8 | 0 | 3 | 1.8 x 10¹⁰ | 68 |

| | | | | | |
|---|---|---|---|---|---|
| a. Based upon the total weight of IDP + phthalic anhydride. | | | | | |

### Examples 37-39

These examples provide a comparison of acid end-capping during polymerization versus melt processing.

Alloys comprised of 59.6 weight percent Eastar® PETG 6763 as the thermoplastic material, (30-X) weight percent of IDP described in Examples 9 and 10 above, 9.9 weight percent compatibilizer, 0.5 weight percent antioxidant, and X weight percent phthalic anhydride as the acid end-capping reagent were prepared on an APV 19-mm twin screw extruder using a feed rate of 5 pounds per hour, a screw speed of 200 RPM, and a melt temperature of 240°C. Cast film samples were subsequently prepared on a 1-inch Killion single-screw extruder equipped with a Maddock mixing screw using a screw speed of 115 RPM and a melt temperature of 255°C. The surface resistivities (Rₛ) of the alloys measured according to ANSI ESD S11.11 at 50% relative humidity are shown in Table 10. Examples 38 and 39, which included phthalic anhydride added during polymerization and melt processing respectively, exhibit approximately equivalent reduction in Rₛ compared to Example 37 with no acid end-capping reagent. These examples show that the addition of a cyclic anhydride acid end-capping reagent (i.e. phthalic anhydride) either during polymerization or during melt processing improves the electrostatic dissipating properties of an alloy as exhibited by lower Rₛ.

**Table 10**

| Example | IDP Example | PA Added During Polymerization^{a} (wt%) | PA Added During Melt Processing^{a} (wt%) | Rₛ (ohms per sq) | ΔRₛ (%) |
|---|---|---|---|---|---|
| 37 | 10 | 0 | 0 | 5.6 x 10¹⁰ | N/A |
| 38 | 9 | 2.3 | 0 | 2.1 x 10¹⁰ | 63 |
| 39 | 10 | 0 | 2.3 | 1.8 x 10¹⁰ | 68 |

| | | | | | |
|---|---|---|---|---|---|
| a. Based upon the total weight of IDP + phthalic anhydride. | | | | | |

### Examples 40-42

These examples provide a comparison of acid end-capping during polymerization versus melt processing.

Alloys comprised of 59.6 weight percent Eastar® PETG 6763 as the thermoplastic material, (30-X) weight percent of IDP described in Examples 11 and 12 above, 9.9 weight percent compatibilizer, 0.5 weight percent antioxidant, and X weight percent phthalic anhydride as the acid end-capping reagent were prepared on an APV 19-mm twin screw extruder using a feed rate of 5 pounds per hour, a screw speed of 200 RPM, and a melt temperature of 240°C. Cast film samples were subsequently prepared on a 1-inch Killion single-screw extruder equipped with a Maddock mixing screw using a screw speed of 115 RPM and a melt temperature of 255°C. The surface resistivities (Rₛ) of the alloys measured according to ANSI ESD S11.11 at 50% relative humidity are shown in Table 11. Examples 41 and 42, which included phthalic anhydride addition during polymerization and melt processing respectively, exhibited approximately equivalent reduction in Rₛ compared to Example 40 with no acid end-capping. These examples show that the addition of a cyclic anhydride acid end-capping reagent (i.e. phthalic anhydride) either during polymerization or during melt processing improves the electrostatic dissipating properties of an alloy as exhibited by lower Rₛ.

**Table 11**

| Example | IDP Example | PA Added During Polymerization^{a} (wt%) | PA Added During Melt Processing^{a} (wt%) | Rₛ (ohms per sq) | ΔRₛ (%) |
|---|---|---|---|---|---|
| 40 | 12 | 0 | 0 | 9.9 x 10⁹ | N/A |
| 41 | 11 | 2.3 | 0 | 4.1 x 10⁹ | 58 |
| 42 | 12 | 0 | 2.3 | 5.6 x 10⁹ | 43 |

| | | | | | |
|---|---|---|---|---|---|
| a. Based upon the total weight of IDP + phthalic anhydride. | | | | | |

## Claims

1. An acid end-capped inherently electrostatic dissipating block copolymer (acid end-capped IDP) composition comprising:
(A) from about 95 to about 99.99 weight percent of an inherently electrostatic dissipating block copolymer (IDP) comprised of:
(i) from about 5 to about 85 weight percent of a soft segment of a polyalkylene glycol
and
(ii) from about 15 to about 95 weight percent of a hard segment, wherein the hard segment is derived from a polymer having a glass transition temperature or crystalline melting temperature greater than ambient temperature and being reactive with a hydroxyl functionality,
wherein the weight percents of the soft segment and the hard segment are based on the total weight of components (i) and (ii);
and
(B) from about 0.01 to about 5 weight percent of an acid end-capping reagent having at an acid functionality of at least two;
wherein the weight percents of the IDP and the acid end-capping reagent are based on the total weight of components (A) and (B), and wherein after formation of the IDP, the IDP is subsequently modified with the acid end-capping reagent to form the acid end-capped IDP composition.

2. The acid end-capped IDP composition of claim 1 wherein the IDP is present from about 95 to about 99.9 weight percent and the acid end-capping reagent is present from about 0.1 to about 5 weight percent.

3. The acid end-capped IDP composition of claim 1 wherein the IDP is present from about 97 to about 99.7 weight percent and the acid end-capping reagent is present from about 0.3 to about 3 weight percent.

4. The acid end-capped IDP composition of claim 1 wherein the IDP is selected from the group consisting of a polyetherester, a polyetherurethane, and a polyetheresteramide.

5. The acid end-capped IDP composition of claim 1 wherein the soft segment is present from about 30 to about 65 weight percent and the hard segment is present from about 35 to about 70 weight percent.

6. The acid end-capped IDP composition of claim 1 wherein the polyalkylene glycol is selected from the group consisting of polyethylene glycol, polypropylene glycol, polytetramethylene glycol, and polybutylene glycol or copolymers.

7. The acid end-capped IDP composition of claim 6 wherein the polyalkylene glycol is polyethylene glycol having a molecular weight range of from about 900 to about 8000 grams per mole.

8. The acid end-capped IDP composition of claim 7 wherein the polyalkylene glycol is polyethylene glycol having a molecular weight range of from about 1000 to about 3400 grams per mole.

9. The acid end-capped IDP composition of claim 8 wherein polyethylene glycol has a molecular weight of about 2000 grams per mole.

10. The acid end-capped IDP composition of claim 1 wherein the polymer of the hard segment is a polyester.

11. The acid end-capped IDP composition of claim 1 wherein the polymer of the hard segment is a polyurethane.

12. The acid end-capped IDP composition of claim 1 wherein the polymer of the hard segment is a polyamide.

13. The acid end-capped IDP composition of claim 1 wherein the polymer of the hard segment is a polycarbonate.

14. The acid end-capped IDP composition of claim 1 wherein the acid end-capping reagent is selected from the group consisting of a cyclic anhydride, a multifunctional acid, an ester of a multifunctional acid, a multifunctional acid chloride, and an ester of a multifunctional acid chloride.

15. The acid end-capped IDP composition of claim 14 wherein the acid end-capping reagent is a cyclic anhydride.

16. The acid end-capped IDP composition of claim 14 wherein the acid end-capping reagent is a diacid.

17. The acid end-capped IDP composition of claim 14 wherein the acid end-capping reagent is selected from the group consisting of phthalic anhydride, terephthalic acid, isophthalic acid and adipic acid.

18. An alloy comprising the acid end-capped IDP composition of claim 1 and a thermoplastic base material.

19. The alloy of claim 18 wherein the acid end-capped IDP composition is present from about 10 to about 50 weight percent and the thermoplastic base material is present from about 50 to about 90 weight percent.

20. The alloy of claim 19 wherein the acid end-capped IDP composition is present from about 25 to about 35 weight percent and the thermoplastic base material is present from about 65 to about 75 weight percent.

21. The alloy of claim 18 wherein the thermoplastic base material is selected from the group consisting of polyvinyl chloride; copolymers of polyvinyl chloride; chlorinated polyvinyl chloride; copolymers of styrene and acrylonitrile; terpolymers of styrene, acrylonitrile, and diene rubber; copolymers of styrene and acrylonitrile modified with an acrylate elastomer; copolymers of styrene and acrylonitrile modified with ethylene propylene diene monomer rubber; polystyrenes; rubber modified impact polystyrenes; polyamides; polycarbonates; polyesters; polyetherester block copolymers; polyetheramide block copolymers; polyetherurethane block copolymers; polyurethanes; polyphenylene oxide; polyacetals; cellulosics; acrylics; and polyolefins.

22. The alloy of claim 21 wherein the polyester is selected from a polybutylene terephthalate, a polyethylene terephthalate, and a polyethylene-co-1,4-cyclohexylene terephthalate.

23. A process for preparing an acid end-capped IDP composition comprising the steps of:
(A) forming in a reactor an inherently electrostatic dissipating block copolymer (IDP) comprised of (i) from about 5 to about 85 weight percent of a soft segment of a polyalkylene glycol and (ii) from about 15 to about 95 weight percent of a hard segment, wherein the hard segment is derived from a polymer having a glass transition temperature or crystalline melting temperature greater than ambient temperature and being reactive with a hydroxyl functionality and wherein the weight percents of the soft segment and the hard segment are based on the total weight of components (i) and (ii);
(B) then, adding in the reactor from about 0.01 to about 5 weight percent of an acid end-capping reagent having an acid functionality of at least two to the reaction product of step (A) to form an acid end-capped IDP composition, the weight percent of the acid end-capping reagent is based on the total weight of the reaction product of step (A) and the acid end-capping reagent; and
(C) removing from the reactor an acid end-capped IDP composition.

24. The process of claim 23 wherein in step (B) the acid end-capping reagent is added from about 0.1 to about 5 weight percent.

25. The process of claim 23 wherein in step (B) the acid end-capping reagent is added from about 0.3 to about 3 weight percent.

26. The process of claim 23 further comprising between step (B) and step (C), the step of removing unreacted acid end-capping reagent from the reactor.

27. The process of claim 23 wherein the IDP is a polyetherester and wherein in step (A) the IDP is formed by the steps comprised of:
(1) reacting a first glycol, a polyalkylene glycol and a diacid or a diester of a diacid at sufficient temperatures and pressures to effect esterification or transesterification; and
(2) then, polycondensing the product of step (1) at sufficient temperatures and pressures to form an inherently electrostatic dissipating block copolymer (IDP) having a polyetherester composition and an inherent viscosity of from about 0.4 to about 1.4 dL/g.

28. The process of claim 23 wherein the IDP is a polyetherurethane and wherein step (A) the IDP is formed by reacting the polyalkylene glycol, a non-hindered diisocyanate, and an aliphatic extender glycol at sufficient temperatures and pressures to effect polymerization.

29. The process of claim 23 wherein the IDP is a polyetheresteramide and wherein step (A) the IDP is formed by reacting the polyalkylene glycol with a dicarboxylic polyamide at sufficient temperatures and pressures to effect polymerization.

30. A process for preparing an acid end-capped IDP composition comprising the step of combining in a secondary melt phase operation from about 95 to about 99.99 weight percent of an IDP and from about 0.01 to about 5 weight percent of an acid end-capping reagent having an acid functionality of at least two to form an acid end-capped IDP composition;
wherein the secondary melt phase operation is conducted at a temperature above the melting point of the IDP;
wherein the IDP is comprised of from about 5 to about 85 weight percent of a soft segment of a polyalkylene glycol and from about 15 to about 95 weight percent of a hard segment derived from a polymer having a glass transition temperature or crystalline melting temperature greater than ambient temperature and being reactive with a hydroxyl functionality; and
wherein the weight percents for the IDP and acid end-capping reagent are based on the total weight of the acid end-capped IDP composition and the weight percents for the soft segment and the hard segment are based on the total weight of the IDP.

31. The process of claim 30 wherein the acid end-capping reagent is combined in the secondary melt phase operation from about 0.1 to about 5 weight percent.

32. The process of claim 30 wherein the acid end-capping reagent is combined in the secondary melt phase operation from about 0.3 to about 3 weight percent.

33. The process of claim 30 wherein the secondary melt phase operation is conducted in a twin screw extruder.

34. The process of claim 30 further comprising the step of removing unreacted acid end-capping reagent from the secondary melt phase operation.

35. The process of claim 34 wherein the removing of unreacted acid end-capping reagent is through a devolatilization zone.

36. A process for preparing an alloy of an acid end-capped IDP composition and a thermoplastic base material comprising the step of blending in a melt processing operation an inherently electrostatic dissipating block copolymer (IDP), an acid end-capping reagent having an acid functionality of at least two and a thermoplastic base material;
wherein the IDP is comprised of (i) from about 5 to about 85 weight percent of a soft segment of a polyalkylene glycol and (ii) from about 15 to about 95 weight percent of a hard segment, wherein the hard segment is derived from a polymer having a glass transition temperature or crystalline melting temperature greater than ambient temperature and being reactive with a hydroxyl functionality and wherein the weight percents of the soft segment and the hard segment are based on the total weight of components (i) and (ii);
wherein the amount of acid end-capping reagent is added at from about 0.01 to about 5 weight percent based on the weight of the IDP and acid end-capping reagent; and
wherein the amount of thermoplastic base material is added at from about 50 to about 90 weight percent based on the weight of the acid end-capped IDP and thermoplastic material.

37. A process for preparing an alloy of an acid end-capped IDP composition and a thermoplastic base material comprising the step of combining in a secondary melt phase operation from about 97.5 to about 99.999 weight percent of an IDP/thermoplastic alloy and from about 0.001 to about 2.5 weight percent of an acid end-capping reagent having an acid functionality of at least two to form an alloy of an acid end-capped IDP composition and a thermoplastic base material;
wherein the secondary melt phase operation is conducted at a temperature above the melting point of the IDP;
wherein the IDP/thermoplastic alloy is comprised of from about 10 to about 50 weight percent of an IDP and from about 90 to about 50 weight percent of a thermoplastic material;
wherein the IDP is comprised of from about 5 to about 85 weight percent of a soft segment of a polyalkylene glycol and from about 15 to about 95 weight percent of a hard segment derived from a polymer having a glass transition temperature or crystalline melting temperature greater than ambient temperature and being reactive with a hydroxyl functionality; and
wherein the weight percents for the IDP/thermoplastic alloy and the acid end-capping reagent are based on the total weight of the alloy of the acid end-capped IDP composition and the thermoplastic base material, the weight percents for the IDP and thermoplastic material are based on the total weight of the IDP/thermoplastic alloy and the weight percents for the soft segment and the hard segment are based on the total weight of the IDP.

38. The process of claim 37 wherein the acid end-capping reagent is combined in the secondary melt phase operation from about 0.1 to about 2.5 weight percent.

39. The process of claim 37 wherein the acid end-capping reagent is combined in the secondary melt phase operation from about 0.03 to about 1.5 weight percent.

40. The process of claim 37 wherein the secondary melt phase operation is conducted in a twin screw extruder.

41. The process of claim 37 further comprising between step (B) and step (C), the step of removing unreacted acid end-capping reagent from the reactor.

42. The process of claim 41 wherein the removing of unreacted acid end-capping reagent is through devolatilization zone.

## Patentansprüche

1. Mit Säure endverkappte inhärent elektrostatische Aufladung dissipierende Blockcopolymer- (mit Säure endverkappte IDP-) Zusammensetzung, umfassend:
(A) etwa 95 bis etwa 99,99 Gewichtsprozent eines inhärent Ektrostatik dissipierenden Blockcopolymers (IDP), welches umfasst:
(i) etwa 5 bis etwa 85 Gewichtsprozent eines weichen Segments aus einem Polyalkylenglycol und
(ii) etwa 15 bis etwa 95 Gewichtsprozent eines harten Segments, wobei das harte Segment von einem Polymer mit einer Glasübergangstemperatur oder kristallinen Schmelztemperatur von mehr als Umgebungstemperatur abgeleitet ist und mit einer Hydroxyl-Funktionalität reagieren kann,
wobei die Gewichtsprozente des weichen Segments und des harten Segments auf das Gesamtgewicht der Komponenten (i) und (ii) bezogen sind;
und
(B) etwa 0,01 bis etwa 5 Gewichtsprozent eines mit Säure endverkappenden Reagenz mit einer Säure-Funktionalität von mindestens zwei;
wobei die Gewichtsprozentsätze des IDP und des mit Säure endverkappenden Reagenz auf das Gesamtgewicht der Komponenten (A) und (B) bezogen sind und wobei nach Bildung des IDP das IDP anschließend mit dem mit Säure endverkappenden Reagenz unter Bildung der mit Säure endverkappten IDP-Zusammensetzung modifiziert wird.

2. Mit Säure endverkappte IDP-Zusammensetzung nach Anspruch 1, in der das IDP zu etwa 95 bis etwa 99,9 Gewichtsprozent vorliegt und das mit Säure endverkappende Reagenz zu etwa 0,1 bis etwa 5 Gewichtsprozent vorliegt.

3. Mit Säure endverkappte IDP-Zusammensetzung nach Anspruch 1, in der das IDP zu etwa 97 bis etwa 99,7 Gewichtsprozent vorliegt und das mit Säure endverkappende Reagenz zu etwa 0,3 bis etwa 3 Gewichtsprozent vorliegt.

4. Mit Säure endverkappte IDP-Zusammensetzung nach Anspruch 1, in der das IDP ausgewählt ist aus der Gruppe bestehend aus einem Polyetherester, einem Polyetherurethan und einem Polyetheresteramid.

5. Mit Säure endverkappte IDP-Zusammensetzung nach Anspruch 1, in der das weiche Segment zu etwa 30 bis etwa 65 Gewichtsprozent vorliegt und das harte Segment zu etwa 35 bis etwa 70 Gewichtsprozent vorliegt.

6. Mit Säure endverkappte IDP-Zusammensetzung nach Anspruch 1, in der das Polyalkylenglycol ausgewählt ist aus der Gruppe bestehend aus Polyethylenglycol, Polypropylenglycol, Polytetramethylenglycol und Polybutylenglycol oder -Copolymeren.

7. Mit Säure endverkappte IDP-Zusammensetzung nach Anspruch 6, in der das Polyalkylenglycol Polyethylenglycol mit einem Molekulargewichtsbereich von etwa 900 bis etwa 8000 Gramm pro Mol ist.

8. Mit Säure endverkappte IDP-Zusammensetzung nach Anspruch 7, in der das Polyalkylenglycol Polyethylenglycol mit einem Molekulargewichtsbereich von etwa 1000 bis etwa 3400 Gramm pro Mol ist.

9. Mit Säure endverkappte IDP-Zusammensetzung nach Anspruch 8, in der Polyethylenglycol ein Molekulargewicht von etwa 2000 Gramm pro Mol aufweist.

10. Mit Säure endverkappte IDP-Zusammensetzung nach Anspruch 1, in der das Polymer des harten Segments ein Polyester ist.

11. Mit Säure endverkappte IDP-Zusammensetzung nach Anspruch 1, in der das Polymer des harten Segments ein Polyurethan ist.

12. Mit Säure endverkappte IDP-Zusammensetzung nach Anspruch 1, in der das Polymer des harten Segments ein Polyamid ist.

13. Mit Säure endverkappte IDP-Zusammensetzung nach Anspruch 1, in der das Polymer des harten Segments ein Polycarbonat ist.

14. Mit Säure endverkappte IDP-Zusammensetzung nach Anspruch 1, in der das mit Säure endverkappende Reagenz ausgewählt ist aus der Gruppe bestehend aus einem cyclischen Anhydrid, einer multifunktionellen Säure, einem Ester einer multifunktionellen Säure, einem multifunktionellen Säurechlorid und einem Ester eines multifunktionellen Säurechlorids.

15. Mit Säure endverkappte IDP-Zusammensetzung nach Anspruch 14, in der das mit Säure endverkappende Reagenz ein cyclisches Anhydrid ist.

16. Mit Säure endverkappte IDP-Zusammensetzung nach Anspruch 14, in der das mit Säure endverkappende Reagenz eine Disäure ist.

17. Mit Säure endverkappte IDP-Zusammensetzung nach Anspruch 14, in der das mit Säure endverkappende Reagenz ausgewählt ist aus der Gruppe bestehend aus Phthalsäureanhydrid, Terephthalsäure, Isophthalsäure und Adipinsäure.

18. Legierung, umfassend die mit Säure endverkappte IDP-Zusammensetzung nach Anspruch 1 und ein thermoplastisches Grundmaterial.

19. Legierung nach Anspruch 18, in der die mit Säure endverkappte IDP-Zusammensetzung zu etwa 10 bis etwa 50 Gewichtsprozent vorliegt und das thermoplastische Grundmaterial zu etwa 50 bis etwa 90 Gewichtsprozent vorliegt.

20. Legierung nach Anspruch 19, in der die mit Säure endverkappte IDP-Zusammensetzung zu etwa 25 bis etwa 35 Gewichtsprozent vorliegt und das thermoplastische Grundmaterial zu etwa 65 bis etwa 75 Gewichtsprozent vorliegt.

21. Legierung nach Anspruch 18, in der das thermoplastische Grundmaterial ausgewählt ist aus der Gruppe bestehend aus Polyvinylchlorid; Copolymeren von Polyvinylchlorid; chloriertem Polyvinylchlorid; Copolymeren von Styrol und Acrylnitril; Terpolymeren von Styrol, Acrylnitril und Dien-Kautschuk; Copolymeren von Styrol und Acrylnitril, die mit einem Acrylat-Elastomer modifiziert sind; Copolymeren von Styrol und Acrylnitril, die mit Ethylen-Propylen-Dien-Monomer-Kautschuk modifiziert sind; Polystyrolen; Kautschukmodifizierten schlagzähen Polystyrolen; Polyamiden; Polycarbonaten; Polyestern; Polyetherester-Blockcopolymeren; Polyetheramid-Blockcopolymeren; Polyetherurethan-Blockcopolymeren; Polyurethanen; Polyphenylenoxid; Polyacetalen; Cellulose-Derivaten; Acryl-Derivaten; und Polyolefinen.

22. Legierung nach Anspruch 21, in der der Polyester aus einem Polybutylenterephthalat, einem Polyethylenterephthalat und einem Polyethylen-co-1,4-cyclohexylenterephthalat ausgewählt ist.

23. Verfahren zur Herstellung einer mit Säure endverkappten IDP-Zusammensetzung, umfassend die Schritte:
(A) Bilden eines inhärent elektrostatische Aufladung dissipierenden Blockcopolymers (IDP) in einem Reaktor, das (i) etwa 5 bis etwa 85 Gewichtsprozent eines weichen Segments aus einem Polyalkylenglycol und (ii) etwa 15 bis etwa 95 Gewichtsprozent eines harten Segments umfasst, wobei das harte Segment von einem Polymer mit einer Glasübergangstemperatur oder kristallinen Schmelztemperatur von mehr als Umgebungstemperatur abgeleitet ist und mit einer Hydroxyl-Funktionalität reagieren kann und wobei die Gewichtsprozentsätze des weichen Segments und des harten Segments auf das Gesamtgewicht der Komponenten (i) und (ii) bezogen sind;
(B) dann Zugabe von etwa 0,01 bis etwa 5 Gewichtsprozent eines mit Säure endverkappenden Reagenz mit einer Säure-Funktionalität von mindestens zwei zu dem Reaktionsprodukt von Schritt (A) in dem Reaktor, um eine mit Säure endverkappte IDP-Zusammensetzung zu bilden, wobei der Gewichtsprozentsatz des mit Säure endverkappenden Reagenz auf das Gesamtgewicht des Reaktionsprodukts von Schritt (A) und des mit Säure endverkappenden Reagenz bezogen ist; und
(C) Entfernen einer mit Säure endverkappten IDP-Zusammensetzung aus dem Reaktor.

24. Verfahren nach Anspruch 23, in dem im Schritt (B) das mit Säure endverkappende Reagenz zu etwa 0,1 bis etwa 5 Gewichtsprozent zugesetzt wird.

25. Verfahren nach Anspruch 23, in dem im Schritt (B) das mit Säure endverkappende Reagenz zu etwa 0,3 bis etwa 3 Gewichtsprozent zugesetzt wird.

26. Verfahren nach Anspruch 23, weiter umfassend zwischen Schritt (B) und Schritt (C) den Schritt der Entfernung von unumgesetztem mit Säure endverkappendem Reagenz aus dem Reaktor.

27. Verfahren nach Anspruch 23, in dem das IDP ein Polyetherester ist und in dem im Schritt (A) das IDP durch die Schritte gebildet wird, welche umfassen:
(1) Umsetzen eines ersten Glycols, eines Polyalkylenglycols und einer Disäure oder eines Diesters einer Disäure bei ausreichenden Temperaturen und Drücken, um eine Veresterung oder Umesterung zu bewirken; und
(2) anschließendes Polykondensieren des Produkts von Schritt (1) bei ausreichenden Temperaturen und Drücken, um ein inhärent elektrostatische Aufladung dissipierendes Blockcopolymer (IDP) mit einer Polyetherester-Zusammensetzung und einer inneren Viskosität von etwa 0,4 bis etwa 1,4 dl/g zu bilden.

28. Verfahren nach Anspruch 23, in dem das IDP ein Polyetherurethan ist und in dem im Schritt (A) das IDP durch Umsetzung des Polyalkylenglycols, eines nicht-gehinderten Diisocyanats und eines aliphatischen Verschnittglycols bei ausreichenden Temperaturen und Drücken, um eine Polymerisation zu bewirken, gebildet wird.

29. Verfahren nach Anspruch 23, in dem das IDP ein Polyetheresteramid ist und in dem im Schritt (A) das IDP durch Umsetzung des Polyalkylenglycols mit einem dicarboxylischen Polyamid bei ausreichenden Temperaturen und Drücken, um eine Polymerisation zu bewirken, gebildet wird.

30. Verfahren zur Herstellung einer mit Säure endverkappten IDP-Zusammensetzung, umfassend die Schritte der Vereinigung von etwa 95 bis etwa 99,99 Gewichtsprozent eines IDP und von etwa 0,01 bis etwa 5 Gewichtsprozent eines mit Säure endverkappenden Reagenz mit einer Säure-Funktionalität von mindestens zwei in einem sekundären Schmelzphasen-Prozess, um eine mit Säure endverkappte IDP-Zusammensetzung zu bilden;
wobei der sekundäre Schmelzphasen-Prozess bei einer Temperatur oberhalb des Schmelzpunkts des IDP durchgeführt wird;
wobei das IDP etwa 5 bis etwa 85 Gewichtsprozent eines weichen Segments aus einem Polyalkylenglycol und etwa 15 bis etwa 95 Gewichtsprozent eines harten Segments umfasst, das von einem Polymer mit einer Glasübergangstemperatur oder einem kristallinen Schmelzpunkt von mehr als Umgebungstemperatur abgeleitet ist und das mit einer Hydroxyl-Funktionalität reagieren kann; und
wobei die Gewichtsprozentsätze des IDP und des mit Säure endverkappenden Reagenz auf das Gesamtgewicht der mit Säure endverkappten IDP-Zusammensetzung bezogen sind und die Gewichtsprozentsätze des weichen Segments und des harten Segments auf das Gesamtgewicht des IDP bezogen sind.

31. Verfahren nach Anspruch 30, in dem das mit Säure endverkappende Reagenz zu etwa 0,1 bis etwa 5 Gewichtsprozent in dem sekundären Schmelzphasen-Prozess vereinigt wird.

32. Verfahren nach Anspruch 30, in dem das mit Säure endverkappende Reagenz zu etwa 0,3 bis etwa 3 Gewichtsprozent in dem sekundären Schmelzphasen-Prozess vereinigt wird.

33. Verfahren nach Anspruch 30, in dem der sekundäre Schmelzphasen-Prozess in einem Doppelschnecken-Extruder durchgeführt wird.

34. Verfahren nach Anspruch 30, weiter umfassend den Schritt der Entfernung von unumgesetztem mit Säure endverkappendem Reagenz aus dem sekundären Schmelzphasen-Prozess.

35. Verfahren nach Anspruch 34, in dem die Enfernung von unumgesetztem mit Säure endverkappendem Reagenz durch eine Entgasungszone geschieht.

36. Verfahren zur Herstellung einer Legierung aus einer mit Säure endverkappten IDP-Zusammensetzung und einem thermoplastischen Grundmaterial, umfassend den Schritt: Mischen eines inhärent elektrostatische Aufladung dissipierenden Blockcopolymers (IDP), eines mit Säure endverkappenden Reagenz mit einer Säure-Funktionalität von mindestens zwei und eines thermoplastischen Grundmaterials in einem Schmelzphasen-Prozess;
wobei das IDP (i) etwa 5 bis etwa 85 Gewichtsprozent eines weichen Segments aus einem Polyalkylenglycol und (ii) etwa 15 bis etwa 95 Gewichtsprozent eines harten Segments umfasst, wobei das harte Segment von einem Polymer mit einer Glasübergangstemperatur oder kristallinen Schmelztemperatur von mehr als Umgebungstemperatur abgeleitet ist und mit einer Hydroxyl-Funktionalität reagieren kann und wobei die Gewichtsprozentsätze des weichen Segments und des harten Segments auf das Gesamtgewicht der Komponenten (i) und (ii) bezogen sind;
wobei eine Menge an mit Säure endverkappendem Reagenz von etwa 0,01 bis etwa 5 Gewichtsprozent, bezogen auf das Gewicht des IDP und des mit Säure endverkappenden Reagenz, zugesetzt wird; und
wobei eine Menge an thermoplastischem Grundmaterial von etwa 50 bis etwa 90 Gewichtsprozent, bezogen auf das Gewicht des mit Säure endverkappten IDP und des thermoplastischen Materials, zugesetzt wird.

37. Verfahren zur Herstellung einer Legierung aus einer mit Säure endverkappten IDP-Zusammensetzung und einem thermoplastischen Grundmaterial, umfassend den Schritt: Vereinigen von etwa 97,5 bis etwa 99,999 Gewichtsprozent einer IDP/thermoplastischen Legierung und von etwa 0,001 bis etwa 2,5 Gewichtsprozent eines mit Säure endverkappenden Reagenz mit einer Säure-Funktionalität von mindestens zwei in einem sekundären Schmelzphasen-Prozess, um eine Legierung aus einer mit Säure endverkappten IDP-Zusammensetzung und einem thermoplastischen Grundmaterial zu bilden;
wobei der sekundäre Schmelzphasen-Prozess bei einer Temperatur oberhalb des Schmelzpunkts des IDP durchgeführt wird;
wobei die IDP/thermoplastische Legierung etwa 10 bis etwa 50 Gewichtsprozent eines IDP und etwa 90 bis etwa 50 Gewichtsprozent eines thermoplastischen Materials umfasst;
wobei das IDP etwa 5 bis etwa 85 Gewichtsprozent eines weichen Segments aus einem Polyalkylenglycol und etwa 15 bis etwa 95 Gewichtsprozent eines harten Segments umfasst, das von einem Polymer mit einer Glasübergangstemperatur oder kristallinen Schmelztemperatur von mehr als Umgebungstemperatur abgeleitet ist und mit einer Hydroxyl-Funktionalität reagieren kann; und
wobei die Gewichtsprozente der IDP/thermoplastischen Legierung und des mit Säure endverkappenden Reagenz auf das Gesamtgewicht der Legierung aus der mit Säure endverkappten IDP-Zusammensetzung und dem thermoplastischen Grundmaterial bezogen sind, wobei die Gewichtsprozentsätze des IDP und des thermoplastischen Materials auf das Gesamtgewicht der IDP/thermoplastischen Legierung bezogen sind und die Gewichtsprozentsätze des weichen Segments und des harten Segments auf das Gesamtgewicht des IDP bezogen sind.

38. Verfahren nach Anspruch 37, in dem das mit Säure endverkappende Reagenz zu etwa 0,1 bis etwa 2,5 Gewichtsprozent in dem sekundären Schmelzphasen-Prozess vereinigt wird.

39. Verfahren nach Anspruch 37, in dem das mit Säure endverkappende Reagenz zu etwa 0,03 bis etwa 1,5 Gewichtsprozent in dem sekundären Schmelzphasen-Prozess vereinigt wird.

40. Verfahren nach Anspruch 37, in dem der sekundäre Schmelzphasen-Prozess in einem Doppelschnecken-Extruder durchgeführt wird.

41. Verfahren nach Anspruch 37, weiter umfassend zwischen Schritt (B) und Schritt (C) den Schritt der Entfernung von unumgesetztem mit Säure endverkappendem Reagenz aus dem Reaktor.

42. Verfahren nach Anspruch 41, in dem die Entfernung von unumgesetztem mit Säure endverkappendem Reagenz durch eine Entgasungszone geschieht.

## Revendications

1. Composition de copolymère à blocs intrinsèquement dissipateur électrostatique à coiffes terminales acides (IDP à coiffes terminales acides), comprenant:
(A) d'environ 95 à environ 99,99 % en masse d'un copolymère à blocs intrinsèquement dissipateur électrostatique (IDP), constitué de
(i) environ 5 à environ 85 % en masse d'un segment souple d'un polyalkylèneglycol, et de
(ii) environ 15 à environ 95 % en masse d'un segment dur, le segment dur provenant d'un polymère ayant une température de transition vitreuse ou une température de fusion cristalline supérieure à la température ambiante et étant réactif avec une fonctionnalité hydroxy,
les pourcentages en masse du segment souple et du segment dur se rapportant à la masse totale des constituants (i) et (ii);
et
(B) d'environ 0,01 à environ 5 % en masse d'un réactif de coiffage terminal acide ayant une fonctionnalité acide d'au moins 2;
où les pourcentages en masse de l'IDP et du réactif de coiffage terminal acide se rapportent à la masse totale des constituants (A) et (B), et où, après la formation de l'IDP, l'IDP est ensuite modifié avec le réactif de coiffage terminal acide pour former la composition d'IDP à coiffes terminales acides.

2. Composition d'IDP à coiffes terminales acides selon la revendication 1, dans laquelle l'IDP est présent en une quantité d'environ 95 à environ 99,9 % en masse et le réactif de coiffage terminal acide est présent en une quantité d'environ 0,1 à environ 5 % en masse.

3. Composition d'IDP à coiffes terminales acides selon la revendication 1, dans laquelle l'IDP est présent en une quantité d'environ 97 à environ 99,7 % en masse et le réactif de coiffage terminal acide est présent en une quantité d'environ 0,3 à environ 3 % en masse.

4. Composition d'IDP à coiffes terminales acides selon la revendication 1, dans laquelle l'IDP est choisi dans le groupe constitué par un polyétherester, un polyétheruréthane et un polyétheresteramide.

5. Composition d'IDP à coiffes terminales acides selon la revendication 1, dans laquelle le segment souple est présent en une quantité d'environ 30 à environ 65 % en masse et le segment dur est présent en une quantité d'environ 35 à environ 70 % en masse.

6. Composition d'IDP à coiffes terminales acides selon la revendication 1, dans laquelle le polyalkylèneglycol est choisi dans le groupe constitué par un polyéthylèneglycol, un polypropylèneglycol, un polytétraméthylèneglycol et un polybutylèneglycol ou des copolymères.

7. Composition d'IDP à coiffes terminales acides selon la revendication 6, dans laquelle le polyalkylèneglycol est un polyéthylèneglycol ayant un intervalle de masse molaire d'environ 900 à environ 8 000 g/mol.

8. Composition d'IDP à coiffes terminales acides selon la revendication 7, dans laquelle le polyalkylèneglycol est un polyéthylèneglycol ayant un intervalle de masse molaire d'environ 1 000 à environ 3 400 g/mol.

9. Composition d'IDP à coiffes terminales acides selon la revendication 8, dans laquelle le polyéthylèneglycol a une masse molaire d'environ 2 000 g/mol.

10. Composition d'IDP à coiffes terminales acides selon la revendication 1, dans laquelle le polymère du segment dur est un polyester.

11. Composition d'IDP à coiffes terminales acides selon la revendication 1, dans laquelle le polymère du segment dur est un polyuréthane.

12. Composition d'IDP à coiffes terminales acides selon la revendication 1, dans laquelle le polymère du segment dur est un polyamide.

13. Composition d'IDP à coiffes terminales acides selon la revendication 1, dans laquelle le polymère du segment dur est un polycarbonate.

14. Composition d'IDP à coiffes terminales acides selon la revendication 1, dans laquelle le réactif de coiffage terminal acide est choisi dans le groupe constitué par un anhydride cyclique, un acide multifonctionnel, un ester d'un acide multifonctionnel, un chlorure d'acide multifonctionnel, et un ester d'un chlorure d'acide multifonctionnel.

15. Composition d'IDP à coiffes terminales acides selon la revendication 14, dans laquelle le réactif de coiffage terminal acide est un anhydride cyclique.

16. Composition d'IDP à coiffes terminales acides selon la revendication 14, dans laquelle le réactif de coiffage terminal acide est un diacide.

17. Composition d'IDP à coiffes terminales acides selon la revendication 14, dans laquelle le réactif de coiffage terminal acide est choisi dans le groupe constitué par l'anhydride phtalique, l'acide téréphtalique, l'acide isophtalique et l'acide adipique.

18. Alliage comprenant la composition d'IDP à coiffes terminales acides selon la revendication 1 et un matériau de base thermoplastique.

19. Alliage selon la revendication 18, dans lequel la composition d'IDP à coiffes terminales acides est présente en une quantité d'environ 10 à environ 50 % en masse et le matériau de base thermoplastique est présent en une quantité d'environ 50 à environ 90 % en masse.

20. Alliage selon la revendication 19, dans lequel la composition d'IDP à coiffes terminales acides est présente en une quantité d'environ 25 à environ 35 % en masse et le matériau de base thermoplastique est présent en une quantité d'environ 65 à environ 75 % en masse.

21. Alliage selon la revendication 18, dans lequel le matériau de base thermoplastique est choisi dans le groupe constitué par du poly(chlorure de vinyle); des copolymères de poly(chlorure de vinyle); du poly(chlorure de vinyle) chloré; des copolymères de styrène et d'acrylonitrile; des terpolymères de styrène, d'acrylonitrile et d'un caoutchouc diénique; des copolymères de styrène et d'acrylonitrile modifiés avec un élastomère acrylate; des copolymères de styrène et d'acrylonitrile modifiés avec du caoutchouc de monomères éthylène - propylène - diène; des polystyrènes; des polystyrènes chocs modifiés avec du caoutchouc; des polyamides; des polycarbonates; des polyesters; des copolymères à blocs polyétheresters; des copolymères à blocs polyétheramides; des copolymères à blocs polyétheruréthanes; des polyuréthanes; du poly(oxyde de phénylène); des polyacétals; des matériaux cellulosiques; des matériaux acryliques; et des polyoléfines.

22. Alliage selon la revendication 21, dans lequel le polyester est choisi parmi un poly(téréphtalate de butylène), un poly(téréphtalate d'éthylène), et un poly(téréphtalate d'éthylène-co-1,4-cyclohexylène).

23. Procédé de préparation d'une composition d'IDP à coiffes terminales acides, comprenant les étapes selon lesquelles:
(A) dans un réacteur, on forme un copolymère à blocs intrinsèquement dissipateur électrostatique (IDP), constitué de (i) environ 5 à environ 85 % en masse d'un segment souple d'un polyalkylèneglycol et de (ii) environ 15 à environ 95 % en masse d'un segment dur, le segment dur étant dérivé d'un polymère ayant une température de transition vitreuse ou une température de fusion cristalline supérieure à la température ambiante et étant réactif avec une fonctionnalité hydroxy, et les pourcentages en masse du segment souple et du segment dur se rapportant à la masse totale des constituants (i) et (ii);
(B) on ajoute ensuite, dans le réacteur, d'environ 0,01 à environ 5 % en masse d'un réactif de coiffage terminal acide ayant une fonctionnalité acide d'au moins 2 au produit de réaction de l'étape (A) pour former une composition d'IDP à coiffes terminales acides, le pourcentage en masse du réactif de coiffage terminal acide se rapportant à la masse totale du produit de réaction de l'étape (A) et du réactif de coiffage terminal acide; et
(C) on sépare du réacteur une composition d'IDP à coiffes terminales acides.

24. Procédé selon la revendication 23, dans lequel, dans l'étape (B), on ajoute d'environ 0,1 à environ 5 % en masse du réactif de coiffage terminal acide.

25. Procédé selon la revendication 23, dans lequel, dans l'étape (B), on ajoute d'environ 0,3 à environ 3 % en masse du réactif de coiffage terminal acide.

26. Procédé selon la revendication 23, comprenant en outre, entre l'étape (B) et l'étape (C), l'étape de séparation du réactif de coiffage terminal acide n'ayant pas réagi du réacteur.

27. Procédé selon la revendication 23, dans lequel l'IDP est un polyétherester et, dans l'étape (A), l'IDP est formé par les étapes selon lesquelles:
(1) on fait réagir un premier glycol, un polyalkylèneglycol et un diacide ou un diester d'un diacide à des températures et des pressions suffisantes pour effectuer une estérification ou une transestérification; et
(2) on effectue ensuite une polycondensation du produit de l'étape (1) à des températures et des pressions suffisantes pour former un copolymère à blocs intrinsèquement dissipateur électrostatique (IDP) ayant une composition de polyétherester et une viscosité intrinsèque d'environ 0,4 à environ 1,4 dl/g.

28. Procédé selon la revendication 23, dans lequel l'IDP est un polyétheruréthane et dans lequel, dans l'étape (A), on forme l'IDP en faisant réagir le polyalkylèneglycol, un diisocyanate non encombré et un glycol aliphatique extendeur à des températures et des pressions suffisantes pour effectuer la polymérisation.

29. Procédé selon la revendication 23, dans lequel l'IDP est un polyétheresteramide et dans lequel, dans l'étape (A), on forme l'IDP en faisant réagir le polyalkylèneglycol avec un polyamide dicarboxylique à des températures et des pressions suffisantes pour effectuer la polymérisation.

30. Procédé de préparation d'une composition d'IDP à coiffes terminales acides comprenant l'étape selon laquelle, dans une opération en phase fondue secondaire, on combine environ 95 à environ 99,9 % en masse d'un IDP et environ 0,01 à environ 5 % en masse d'un réactif de coiffage terminal acide ayant une fonctionnalité acide d'au moins 2 pour former une composition d'IDP à coiffes terminales acides;
dans lequel l'opération en phase fondue secondaire s'effectue à une température supérieure au point de fusion de l'IDP;
dans lequel l'IDP est constitué d'environ 5 à environ 85 % en masse d'un segment souple d'un polyalkylèneglycol et d'environ 15 à environ 95 % en masse d'un segment dur provenant d'un polymère ayant une température de transition vitreuse ou une température de fusion cristalline supérieure à la température ambiante et étant réactif avec une fonctionnalité hydroxy; et
dans lequel les pourcentages en masse pour l'IDP et le réactif de coiffage terminal acide se rapportent à la masse totale de la composition d'IDP à coiffes terminales acides, et les pourcentages en masse pour le segment souple et le segment dur se rapportent à la masse totale de l'IDP.

31. Procédé selon la revendication 30, dans lequel le réactif de coiffage terminal acide est combiné dans l'opération en phase fondue secondaire en une quantité d'environ 0,1 à environ 5 % en masse.

32. Procédé selon la revendication 30, dans lequel le réactif de coiffage terminal acide est combiné dans l'opération en phase fondue secondaire en une quantité d'environ 0,3 à environ 3 % en masse.

33. Procédé selon la revendication 30, dans lequel l'opération en phase fondue secondaire s'effectue dans une extrudeuse bivis.

34. Procédé selon la revendication 30, comprenant en outre l'étape de séparation du réactif de coiffage terminal acide n'ayant pas réagi de l'opération en phase fondue secondaire.

35. Procédé selon la revendication 34, dans lequel l'élimination du réactif de coiffage terminal acide s'effectue par l'intermédiaire d'une zone de dégazage.

36. Procédé de préparation d'un alliage d'une composition d'IDP à coiffes terminales acides et d'un matériau de base thermoplastique, comprenant l'étape de mélange, dans une opération de traitement à l'état fondu, d'un copolymère à blocs intrinsèquement dissipateur électrostatique (IDP), d'un réactif de coiffage terminal acide ayant une fonctionnalité acide d'au moins 2 et d'un matériau de base thermoplastique;
dans lequel l'IDP est constitué de (i) environ 5 à environ 85 % en masse d'un segment souple d'un polyalkylèneglycol et de (ii) environ 15 à environ 95 % en masse d'un segment dur, le segment dur provenant d'un polymère ayant une température de transition vitreuse ou une température de fusion cristalline supérieure à la température ambiante et étant réactif avec une fonctionnalité hydroxy et dans lequel les pourcentages en masse du segment souple et du segment dur se rapportent à la masse totale des constituants (i) et (ii);
dans lequel la quantité de réactif de coiffage terminal acide ajoutée est d'environ 0,01 à environ 5 % en masse par rapport à la masse de l'IDP et du réactif de coiffage terminal acide; et
dans lequel la quantité de matériau de base thermoplastique ajoutée est d'environ 50 à environ 90 % en masse par rapport à la masse de l'IDP à coiffes terminales acides et du matériau thermoplastique.

37. Procédé de préparation d'un alliage d'une composition d'IDP à coiffes terminales acides et d'un matériau de base thermoplastique comprenant l'étape selon laquelle on combine dans une opération en phase fondue secondaire environ 97,5 à environ 99,999 % en masse d'un alliage IDP/thermoplastique et environ 0,001 à environ 2,5 % en masse d'un réactif de coiffage terminal acide ayant une fonctionnalité acide d'au moins 2 pour former un alliage d'une composition d'IDP à coiffes terminales acides et d'un matériau de base thermoplastique;
dans lequel l'opération en phase fondue secondaire s'effectue à une température supérieure au point de fusion de l'IDP;
dans lequel l'alliage IDP/thermoplastique est constitué d'environ 10 à environ 50 % en masse d'un IDP et d'environ 90 à environ 50 % en masse d'un matériau thermoplastique;
dans lequel l'IDP est constitué d'environ 5 à environ 85 % en masse d'un segment souple d'un polyalkylèneglycol et d'environ 15 à environ 95 % en masse d'un segment dur provenant d'un polymère ayant une température de transition vitreuse ou une température de fusion cristalline supérieure à la température ambiante et étant réactif avec une fonctionnalité hydroxy; et
dans lequel les pourcentages en masse pour l'alliage IDP/thermoplastique et le réactif de coiffage terminal acide se rapportent à la masse totale de l'alliage de la composition d'IDP à coiffes terminales acides et du matériau de base thermoplastique, les pourcentages en masse pour l'IDP et le matériau thermoplastique se rapportent à la masse totale de l'alliage IDP/thermoplastique et les pourcentages en masse pour le segment souple et le segment dur se rapportent à la masse totale de l'IDP.

38. Procédé selon la revendication 37, dans lequel le réactif de coiffage terminal acide est combiné dans l'opération en phase fondue secondaire en une quantité d'environ 0,1 à environ 2,5 % en masse.

39. Procédé selon la revendication 37, dans lequel le réactif de coiffage terminal acide est combiné dans l'opération en phase fondue secondaire en une quantité d'environ 0,03 à environ 1,5 % en masse.

40. Procédé selon la revendication 37, dans lequel l'opération en phase fondue secondaire s'effectue dans une extrudeuse bivis.

41. Procédé selon la revendication 37, comprenant en outre, entre l'étape (B) et l'étape (C), l'étape de séparation du réactif de coiffage terminal acide n'ayant pas réagi du réacteur.

42. Procédé selon la revendication 41, dans lequel la séparation du réactif de coiffage terminal acide n'ayant pas réagi s'effectue par l'intermédiaire d'une zone de dégazage.
